# EUROPEAN PATENT APPLICATION

(11) **EP 4 550 718 A1**
(43) Date of publication of application: **07.05.2025**
(21) Application number: 22948535.4
(22) Date of filing: 30.06.2022
(51) Int. Cl.: H04L 9/32

(54) **SECURITY REALIZATION METHOD AND APPARATUS, AND SYSTEM, COMMUNICATION DEVICE, CHIP AND STORAGE MEDIUM**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); LIU, Xuefeng, Dongguan, Guangdong 523860 (CN); ZOU, Jipeng, Dongguan, Guangdong 523860 (CN); SHI, Cong, Dongguan, Guangdong 523860 (CN)
(74) Representative: RGTH
(86) International application number: PCT/CN2022/102893
(87) International publication number: WO 2024/000430

(57) **Abstract**

The embodiments of the present disclosure provide a security implementation method and apparatus, a system, a communication device, a chip and a storage medium. The method includes: receiving, by an issuing node, first request information sent by a first user node, the first request information being used to request a first credential, where the first credential is used to verify an identity of the first user node; and generating, by the issuing node, the first credential in response to the first request information in a case where the issuing node has a first authority, where the first authority refers to an authority capable of generating a credential, and the first authority is jointly granted to the issuing node by multiple committee nodes.

## Description

### TECHNICAL FIELD

Embodiments of the present disclosure relate to the field of mobile communication technology, and in particular, to a security implementation method and apparatus, a system, a communication device, a chip and a storage medium.

### BACKGROUND

In a current communication network, a manner of a centralized identity management is usually used to manage an identity of a device. Centralized identity management specifically refers to the management of identity data of user devices by a single authority and the associated authentication and authorization based on the identity data.

However, with the development of technology, a large number of devices will be introduced into the communication network, such as a large number of zero-power consumption devices, and integrated sensing and communication devices. If the communication network still adopts the manner of the centralized identity management to manage the identity of the device, thus a lot of computation and communication overhead is caused, and the authority may not be able to process a request from each device in a timely manner, resulting in a delay of network service.

### SUMMARY

The embodiments of the present disclosure provide a security implementation method and apparatus, a system, a communication device, a chip and a storage medium.

The embodiments of the present disclosure provide a security implementation method, which includes:
receiving, by an issuing node, first request information sent by a first user node, the first request information being used to request a first credential, where the first credential is used to verify an identity of the first user node; and
generating, by the issuing node, the first credential in response to the first request information in a case where the issuing node has a first authority, where the first authority refers to an authority capable of generating a credential, and the first authority is jointly granted to the issuing node by a plurality of committee nodes.

Another embodiment of the present disclosure provides a security implementation method, which includes:
receiving, by a blockchain node, second request information, the second request information being used for requesting to store a first credential, and the first credential being used to verify an identity of a first user node, where the first credential is generated by an issuing node in a case where the issuing node has a first authority, the first authority refers to an authority capable of generating a credential, and the first authority is granted by a committee node to the issuing node; and
storing, by the blockchain node, the first credential in a block in a case where identity verification of the first user node based on the first credential is passed.

Another embodiment of the present disclosure provides a security implementation method, which includes:
sending, by a first user node, first request information to an issuing node, the first request information being used to request a first credential, where the first credential is used to verify an identity of the first user node.

An embodiment of the present disclosure provides a security implementation method, which includes:
receiving, by a third user node, fourth digital signature sent by a first user node;
acquiring, by the third user node, a first credential of the first user node, where the first credential is generated by an issuing node with a first authority, the first authority refers to an authority capable of generating a credential, the first authority is jointly granted to the issuing node by a plurality of committee nodes; and
verifying, by the third user node, an identity of the first user node based on the first credential and the fourth digital signature.

The embodiments of the present disclosure provide a security implementation apparatus, applied to an issuing node, and the security implementation apparatus includes:
a first receiving unit, configured to receive first request information sent by a first user node, the first request information being used to request a first credential, where the first credential is used to verify an identity of the first user node; and
a credential generation unit, configured to generate the first credential in response to the first request information in a case where the issuing node has a first authority, where the first authority refers to an authority capable of generating a credential, and the first authority is jointly granted to the issuing node by a plurality of committee nodes.

The embodiments of the present disclosure provide a security implementation apparatus, applied to a blockchain node, and the security implementation apparatus includes:
a second receiving unit, configured to receive second request information sent by an issuing node, the second request information being used for requesting to store a first credential, and the first credential being used to verify an identity of a first user node, where the first credential is generated by an issuing node in a case where the issuing node has a first authority, the first authority refers to an authority capable of generating a credential, and the first authority is granted by a committee node to the issuing node; and
a storage control unit, configured to store the first credential in a block, in a case where the identity verification of the first user node based on the first credential is passed.

The embodiments of the present disclosure provide a security implementation apparatus, applied to a first user node, and the security implementation apparatus includes:
a third sending unit, configured to send first request information to an issuing node, the first request information being used to request a first credential, where the first credential is used to verify an identity of the first user node.

The embodiments of the present disclosure provide a security implementation apparatus, applied to a third user node, and the security implementation apparatus includes:
a third receiving unit, configured to receive a fourth digital signature sent by a first user node; and
a first verification unit, configured to verify an identity of the first user node by the third user node based on the first credential and the fourth digital signature.

The embodiments of the present disclosure provide a security implementation system including:
the committee node is configured to jointly authorize the issuing node, so that the issuing node has a first authority, where the first authority refers to an authority capable of generating a credential for a user node; and
the issuing node is configured to manage the user node, and in a case where the issuing node has the first authority, generate the credential of the user node in response to the first request information sent by the user node .

The embodiments of the present disclosure provide a communication device, which includes a processor and a memory. The memory is configured to store a computer program, and the processor is configured to call and run the computer program stored in the memory, so as to perform the above security implementation methods.

The embodiments of the present disclosure provide a chip, configured to implement the above security implementation methods.

Specifically, the chip includes a processor, configured to call a computer program from a memory and run the computer program, so as to enable a device equipped with the chip to perform the above security implementation methods.

The computer-readable storage medium provided by the embodiments of the present disclosure is configured to store a computer program, where the computer program enables a computer to perform the above security implementation methods.

The computer program product provided by the embodiments of the present disclosure, including computer program instructions. The computer program instructions enable a computer to perform the above security implementation methods.

The computer program provided by the embodiments of the present disclosure, upon being executed on a computer, enables the computer to perform the above security implementation methods.

The security implementation method provided by the embodiments of the present disclosure can be applied to the second-layer identity management architecture of a two-layer identity management architecture. An issuing node with the first authority authorized by the committee node can respond to a request for a credential of the user node and generate the credential for the user node. In this way, the committee node can transfer the identity management function for the user node to the issuing node, thereby avoiding the problem of large computation and communication overhead caused by centralized identity management. Moreover, in a case where the number of user nodes increases significantly, the committee node can authorize more issuing nodes to manage identities of more user nodes, further reducing the latency of the network service. In addition, in a case where there are a large number of user nodes, when two user nodes verify each other, the user nodes can acquire credentials from the blockchain node for distributed authentication, thereby improving authentication efficiency. Simultaneously, the user node does not need to store multiple user credentials in advance, further reducing complexity.

### BRIEF DESCRIPTION OF THE DRAWINGS

The accompanying drawings illustrated herein are used to provide a further understanding of the present disclosure and form a part of the present disclosure, and the schematic embodiments of the present disclosure and the description thereof are used to explain the present disclosure and do not constitute an improper limitation of the present disclosure. In the accompanying drawings.
FIG. 1 is a schematic diagram of an application scenario provided by the embodiments of the present disclosure.
FIG. 2 is a first flow diagram of a security implementation method provided by the embodiments of the present disclosure.
FIG. 3 is a second flow diagram of a security implementation method provided by the embodiments of the present disclosure.
FIG. 4 is a third flow diagram of a security implementation method provided by the embodiments of the present disclosure.
FIG. 5 is a fourth flow diagram of a security implementation method provided by the embodiments of the present disclosure.
FIG. 6 is a fifth flow diagram of a security implementation method provided by the embodiments of the present disclosure.
FIG. 7 is a sixth flow diagram of a security implementation method provided by the embodiments of the present disclosure.
FIG. 8 is a schematic diagram of a structure of an exemplary Merkle tree provided by the embodiments of the present disclosure.
FIG. 9 is a schematic diagram of a structural composition of a security implementation apparatus 900 provided by the embodiments of the present disclosure.
FIG. 10 is a schematic diagram of a structural composition of a security implementation apparatus 1000 provided by the embodiments of the present disclosure.
FIG. 11 is a schematic diagram of a structural composition of a security implementation apparatus 1100 provided by the embodiments of the present disclosure.
FIG. 12 is a schematic diagram of a structural composition of a security implementation apparatus 1200 provided by the embodiments of the present disclosure.
FIG. 13 is a schematic structural diagram of a communication device provided by the embodiments of the present disclosure.
FIG. 14 is a schematic structural diagram of a chip provided by the embodiments of the present disclosure.

### DETAILED DESCRIPTION

Technical solutions in the embodiments of the present disclosure will be described below with reference to the accompanying drawings of the embodiments of the present disclosure. Obviously, the described embodiments are merely some but not all of the embodiments of the present disclosure. All other embodiments obtained based on the embodiments of the present disclosure by those ordinary skilled in the art without paying creative efforts shall be included in the protection scope of the present disclosure.

It should be understood that the terms "system" and "network" are often used interchangeably herein. Herein, the term "and/or" is only an association relationship to describe associated objects, which means that there may be three kinds of relationships. For example, A and/or B may represent three cases that: A exists alone, both A and B exist, and B exists alone. In addition, a character "/" herein generally means that related objects before and after "/" are in an "or" relationship. It should also be understood that "indication" mentioned in the embodiments of the present disclosure may mean a direct indication, may mean an indirect indication, or may represent that there is an association relationship. For example, A indicates B, which may mean that A directly indicates B (for example, B may be acquired by A) or may mean that A indirectly indicates B (for example, A indicates C, and B may be acquired by C), or may mean that there is an association relationship between A and B. It should also be understood that the "correspond" mentioned in the embodiments of the present disclosure may indicate that there is a direct correspondence or indirect correspondence between two, or may mean that there is an associated relationship between the two, or may mean a relationship of indicating and being indicated or a relationship of configuring and being configured, etc. It should also be understood that the "predefined" or "predefined rules" mentioned in the embodiments of the present disclosure may be implemented by pre-saving corresponding codes, tables or other manners that may be used for indicating related information, in the device (for example, including a terminal device and a network device), and the present disclosure does not limit its specific implementation. For example, the predefinition may refer to what is defined in a protocol. It should also be understood that in the embodiments of the present disclosure, the "protocol" may refer to a standard protocol in the field of communication, which may include, for example, an LTE protocol, an NR protocol, and related protocols applied in the future communication system, and the present disclosure is not limited thereto.

To facilitate the understanding of the technical solutions in the embodiments of the present disclosure, the relevant technologies of the embodiments of the present disclosure are described below. The above related technologies, as optional solutions, may be arbitrarily combined with the technical solutions of the embodiments of the present disclosure, and those combined solutions all fall within the protection scope of the embodiments of the present disclosure.

Current communication networks typically adopt a centralized identity management architecture. In a centralized identity management architecture, a centralized authority controls identity data of each device in the system and performs authentication and authorization around the identity data of the devices. The identity management architecture of the 3rd generation partnership project (3GPP) belongs to a centralized identity management architecture, in which a network element of the operator can act as an authority to manage and control the identity data of the devices. Specifically, the unified data management (UDM) network element of the operator can centrally manage the identity data of the devices and issue credentials to the terminal devices through universal subscriber identity module (USIM) cards. The operator network authenticates the identity of the terminal device and authorizes the terminal device to access the network.

In the future, integrated sensing and communication scenario and zero-power consumption communication scenario will be very rich, involving the logistics industry, intelligent manufacturing industry, smart home industry, etc. In the integrated sensing and communication scenario and zero-power consumption communication scenario, the identity management of devices involves the participation of multiple parties, such as an operator, an equipment manufacturer, a service provider, which requires the establishment of an identity management mode that is trusted by multiple parties.

However, the existing centralized identity management architecture cannot satisfy the needs of integrated sensing and communication scenario and zero-power consumption scenario. Specifically, the identity data of each device in the centralized identity management architecture, as well as the issuance and revocation of credentials, are managed and implemented by a certification authority (CA) or a limited number of CAs. Due to the huge number of devices in the integrated sensing and communication scenario and the zero-power scenario, the issuance and revocation of device credentials will cause a large amount of computation and communication overhead, resulting in that the CA being unable to process all credential applications in a timely manner, which will cause the delay of the network service. In addition, the current single-layer distributed identity management architecture adopts a consistent identity management strategy for all node management, which cannot satisfy the needs of personalized identity management for multiple services in the scenarios of integrated sensing and communication and zero-power consumption. For authentication management of massive terminals, centralized credential management is less efficient, while distributed credential management can improve the authentication efficiency.

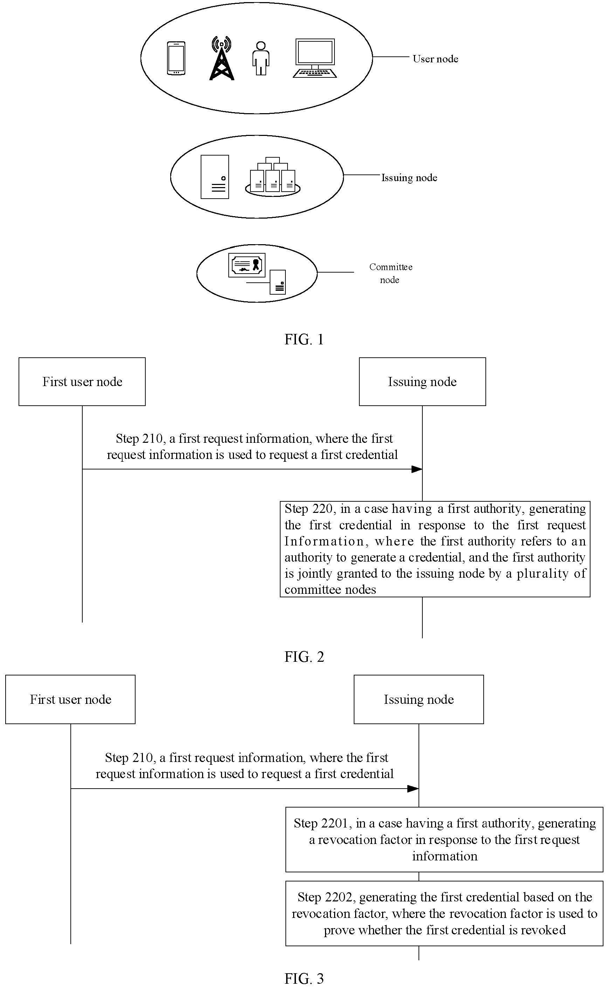

Based on this, the embodiments of the present disclosure provide a security implementation system, which may also be referred to as a two-layer identity management system. As shown in FIG. 1, the two-layer identity management system includes a committee node, an issuing node, and a user node. Herein, multiple committee nodes and multiple issuing nodes constitute a first-layer identity management system, and multiple issuing nodes and multiple user nodes constitute a second-layer identity management system.

The members in the two-layer identity management system provided by the embodiments of the present disclosure are defined as follows.

Committee node, can manage multiple issuing nodes to implement the issuance, management and revocation of credentials of issuing nodes. The multiple committee nodes in the embodiments of the present disclosure may be composed of CAs of authoritative organizations, or representative members in the industry, such as CAs of operators, or CAs of equipment manufacturers.

Issuing node, can manage multiple user nodes to implement the issuance, management and revocation of credentials of user nodes. The multiple issuing nodes in the embodiments of the present disclosure may be composed of a management server of operator, a core network equipment of operator, an access network equipment, a CA server, a management server of equipment manufacturer, a CA server of equipment manufacturer, a management server of service provider, a CA server of service provider, or the like.

User node, i.e., a communication device for data exchange, can be composed of a core network equipment of operator, an access network equipment, various types of terminal devices (such as user equipment (UE), zero-power consumption devices, sensing devices,) etc.

Blockchain node, can store credentials of user nodes, to facilitate distributed management of user credentials and efficiently support user authentication. Blockchain node can be composed of a core network equipment of the operator, an access network equipment, an edge server equipment, a server equipment of the service provider, a management server equipment of equipment manufacturer, various types of terminal devices (such as user equipment (UE)), etc.

Herein, the committee node can be responsible for the initialization and subsequent maintenance of the entire two-layer identity management architecture. In addition, multiple committee nodes can be simulated as a CA to jointly authorize the issuing node, so that the issuing node has the function of issuing credentials for user nodes. Since the number of user devices is huge and the number of issuing nodes is limited, using multiple CA authorization methods to authorize issuing nodes can be more convenient for authorization and management.

In addition, after the issuing node has the authority to issue credentials after being authorized by the committee node, the issuing node can issue corresponding credentials to its own user nodes and introduce blockchain technology to publish the generated credentials on the blockchain. User nodes act as communication devices in the two-layer identity management architecture, and two user nodes need to continuously perform authentication, authorization and other operations in the scenario of mutual communication. Exemplarily, in a case that two user nodes authenticate each other, one of the two user nodes sends its own credential to the other party, and then the other party performs verification based on the credential. Due to the large number of user nodes, the issuing node can manage the credentials of the user nodes in a distributed manner, avoiding the identity data being controlled by a single centralized authority. Each user node can manage the identity data independently, avoiding the problem of large computation and communication overhead caused by centralized identity management. Simultaneously, relying on blockchain technology can efficiently perform distributed identity management while ensuring the security of identity data.

It can be understood that in the first-layer identity management architecture, the committee node can grant the issuing node the authority to issue credentials, and in the second-layer identity management architecture, the authorized issuing node can handle a large number of credential requests from user nodes. In this way, the committee node can transfer the identity management function for the user node to the issuing node. In a case where the number of user nodes increases significantly, the committee node can authorize more issuing nodes to manage identities of more user nodes. In this way, the two-layer identity management architecture can reduce the computation and communication overhead within the system. In addition, authorized issuing nodes can issue credentials for a large number of user nodes, which can further reduce the latency of network services. The embodiments of the present disclosure can combine the CA authorization mode and the distributed authorization mode together, which can perform identity management more efficiently and flexibly. For authentication management of a large number of terminals, centralized credential management is less efficient, while distributed credential management can improve authentication efficiency.

The following is a detailed introduction to the security implementation method in the second-layer identity management architecture.

Referring to FIG. 2, the embodiments of the present disclosure provide a security implementation method, which includes but is not limited to the following steps.

Step 210, receiving, by an issuing node, first request information sent by a first user node, the first request information being used to request a first credential, where the first credential is used to verify an identity of the first user node.

It should be understood that the issuing node can manage multiple user nodes and implement the issuance, management and revocation of credentials for multiple user nodes. In the embodiments of the present disclosure, the first user node may be any one of the multiple user nodes managed by the issuing node.

Optionally, the first user node may send the first request information to the issuing node via a secure channel.

Optionally, the first request information may include at least one of the following information:
identification information of the first user node;
a public key of the first user node;
first service identification information, where the first service identification information is used to indicate a service type supported by the first user node;
first data identification information, where the first data identification information is used to indicate a data type supported by the first user node; or
a first digital signature, where the first digital signature is obtained by signing other information in the first request information according to a private key of the first user node.

In the embodiments of the present disclosure, the first user node may provide one or more services, such as a positioning service, a speed measurement service, a health call service, an environmental monitoring service. In the embodiments of the present disclosure, the service type provided by the first user node may be indicated by the first service identification information.

Optionally, the first service identification information may be an ID of a service type, or an ID of an application server provided by a manufacturer of the first user node, or an ID of an application server provided by a service provider, which is not limited in the embodiments of the present disclosure.

In the embodiments of the present disclosure, the first data identification information may indicate a data type supported by the first user node, and the data type may include one or more types. Typically, the data types supported by a user node are usually related to the services supported by the user node. Exemplarily, if the service supported by the first user node is a health call service, then the data types supported by the first user node may include heart rate data, body temperature data, respiratory rate data, exercise data, blood pressure data, etc. If the service type supported by the first user node is an environmental monitoring service, then the data types supported by the first user node may include location data, wind speed data, temperature data, sunlight data, altitude data, etc. The embodiments of the present disclosure do not limit the data type.

Step 220, generating, by the issuing node, the first credential in response to the first request information in a case where the issuing node has a first authority, where the first authority refers to an authority capable of generating a credential, and the first authority is jointly granted to the issuing node by multiple committee nodes.

It should be understood that in the embodiments of the present disclosure, the issuing node with the first authority can respond to the first request information to generate a first credential for the first user node. Here, the first authority refers to an authority to generate (or referred to as issue) credentials for multiple user nodes managed by the issuing node. The first authority may be jointly granted by the committee nodes. In other words, after the issuing node has the authority to generate a credential through authorization by the committee node, the issuing node can generate a credential for the user node in response to the first request information sent by a user node belonging to the issuing node.

It can be seen that the security implementation method provided by the embodiments of the present disclosure can be applied to the second-layer identity management architecture of a two-layer identity management architecture. An issuing node with the first authority authorized by the committee node can respond to a request of a credential for the user node to generate the credential for the user node. In this way, the committee node can transfer the identity management function for the user node to the issuing node, avoiding the problem of large computation and communication overhead caused by centralized identity management. Moreover, in a case where the number of user nodes increases significantly, the committee node can authorize more issuing nodes to manage identities of more user nodes, further reducing the latency of network services.

Optionally, after receiving the first request information, the issuing node may first verify an identity of the sender of the first request information (i.e., the first user node) to determine whether the first user node is a legitimate user. Only after determining that the first user node is a legitimate user, the issuing node generates a first credential for the first user node.

Optionally, the issuing node may use a shared key between the issuing node and the first user node to verify the identity of the first user node, or the issuing node may use a public key of the first user node to verify the identity of the first user node, which is not limited in the embodiments of the present disclosure.

Optionally, in a case where the first request information includes a first digital signature, the issuing node may use the public key of the first user node to verify the first digital signature to obtain first verification information. If the first verification information is consistent with other information in the first request information except the first digital signature, the issuing node can determine that the first user device is a legitimate user. If the first verification information is inconsistent with other information in the first request information except the first digital signature, the issuing node may determine that the first user node is an illegal user, and/or, the first request information is tampered with by a third party. In this case, the issuing node may ignore the first request information and does not proceed with further processing.

Optionally, the issuing node may maintain a public key list, in which identification information of multiple user nodes belonging to the issuing node and a public key corresponding to each of the multiple user nodes may be stored. After receiving the first request information sent by the first user node, the issuing node may look up the public key corresponding to the identification information of the first user node from the public key list. The issuing node may then verify the first digital signature in the first request information based on the public key to obtain verification information.

Optionally, if the first request information includes the public key of the first user node, the issuing node may also directly use the public key carried in the first request information to verify the first digital signature to obtain verification information. The embodiments of the present disclosure do not limit the manner in which the issuing node acquires the public key of the first user node.

It should be understood that in a case where the verification information is consistent with other information in the first request information except the first digital signature, the issuing node can determine that the first user node is a legitimate user and the first request information has not been tampered with. In this case, the issuing node can generate a first credential for the first user node in response to the first request information.

Optionally, if the first request information includes first service identification information and/or first data identification information, before verifying an identity of the sender of the first request information (i.e., the first user node), the issuing node may also determine whether the service type indicated by the first service identification information, and/or the data type indicated by the first data identification information is supported by itself.

Here, the first service identification information carried in the first request information may be used to characterize the service type of data that the first user node needs to acquire. The first data identification information carried in the first request information may be used to characterize the data type of the data sent by the first user node. Therefore, after receiving the first request information, the issuing node may first determine whether the service type and/or data type required by the first user node is supported by itself.

Optionally, after receiving the first request information, the issuing node may compare the service type corresponding to the first service identification information in the first request information with the service type provided by itself. If the service type provided by the issuing node includes the service type corresponding to the first service identification information, the issuing node determines that the service type indicated by the first service identification information is supported.

Optionally, after receiving the first request information, the issuing node may compare the data type indicated by the first data identification information in the first request information with the data type provided by itself. If the data type provided by the issuing node includes the data type indicated by the first data identification information, the issuing node is determined to support the data type indicated by the first data identification information.

It can be understood that only after confirming that the service type and/or data type of the first user node is supported, the issuing node initiates the identity verification process for the sender of the first request information (i.e., the first user node), thereby generating a first credential for the first user node. If the issuing node does not support the service type indicated by the first service identification information and does not support the data type indicated by the first data identification information, the issuing node may ignore the first request information and does not respond to the first request information.

It can be seen that in the security implementation method provided by the embodiments of the present disclosure, the issuing node can also verify the identity of the first user node before responding to the first request information of the first user node, and generate a first credential for the first user node in a case where the identity verification of the first user node is passed, thereby ensuring the legitimacy of the first credential.

The following describes in detail the process of the issuing node generating the first credential for the first user node.

In the embodiments of the present disclosure, after the issuing node verifies the identity and other information of the first user node, the issuing node can bind its own identification, public key and other information with the relevant information of the first user node to complete the generation of the first credential.

Optionally, referring to FIG. 3, in an embodiment of the present disclosure, generating a first credential in step 220 may also be implemented by the following steps.

Step 2201, generating, by the issuing node, a revocation factor.

Step 2202, generating, by the issuing node, the first credential based on the revocation factor; where the revocation factor is used to prove whether the first credential is revoked.

It should be understood that in order to improve the management efficiency of the issuing node for the credentials of the user nodes and prevent the revoked credentials from being illegally used by criminals, the issuing node may generate a revocation factor for each user node during the process of generating credentials for each user node. In this way, the verifier can quickly verify whether the credential of each user node is revoked through the revocation factor.

Optionally, the issuing node may utilize RSA accumulator technology to generate the revocation factor. In practical applications, the RSA accumulator in cryptography is a one-way membership function. The RSA accumulator can be used to identify whether an object is a member of a set without exposing the members of the set in the process. Herein, the revocation factor corresponding to the credential of each user node can be an RSA accumulator parameter.

In this way, the issuing node can bind the revocation factor, the identification information of the issuing node, the public key and other information with the relevant information of the first user node to complete the generation of the first credential.

Optionally, the first credential includes at least one of the following information:
identification information of the first user node;
a public key of the first user node;
first service identification information, where the first service identification information is used to indicate a service type supported by the first user node;
first data identification information,where the first data identification information is used to indicate a data type supported by the first user node;
a revocation factor, where the revocation factor is used to prove whether the first credential is revoked;
identification information of the issuing node;
a public key of the issuing node; or
a second digital signature, where the second digital signature is obtained by signing other information in the first credential based on a private key of the issuing node.

In an embodiment of the present disclosure, the issuing node can implement the issuance, management and revocation of credentials of user nodes through a distributed identity management method. Herein, the issuing node can use blockchain technology to realize distributed identity management of user nodes.

Optionally, after the issuing node generates the first credential for the first user node, the blockchain technology can be used to store the first credential in the blockchain to realize distributed management of the credential.

In the embodiments of the present disclosure, the issuing node may be a node in the blockchain system. Herein, multiple issuing nodes in the two-layer identity management system provided by the embodiments of the present disclosure can jointly build a blockchain system to realize distributed management of user node credentials.

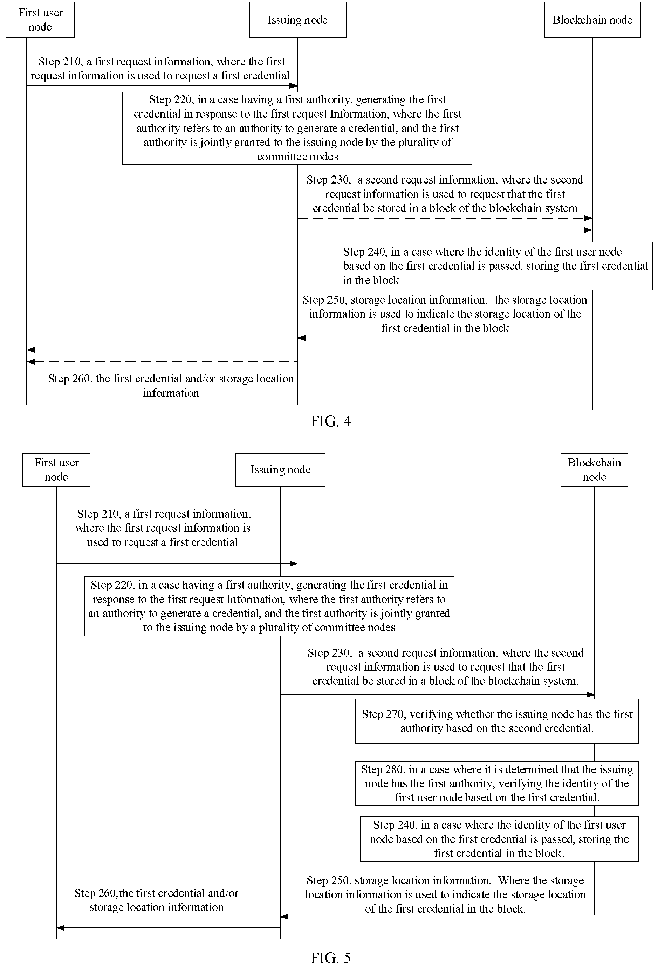

Referring to FIG. 4, the security implementation method provided by the embodiments of the present disclosure may further include the following steps.

Step 230, receiving, by a blockchain node, second request information, where the second request information is used to request that the first credential be stored in a block of the blockchain system.

Herein, the second request information includes the first credential.

Optionally, after the issuing node generates the first credential for the first user node, the issuing node can access the blockchain system to request that the generated first credential be stored in the blockchain.

Herein, the issuing node can send the second request information to other blockchain nodes in the blockchain system, carry the first credential in the second request information, to request the blockchain nodes in the blockchain system to allow the first credential to be stored in the block of the blockchain system.

Optionally, the above receiving, by the blockchain node, the second request information may include: receiving, by the blockchain node, the second request information sent by the issuing node; or receiving, by the blockchain node, the second request information sent by the first user node. That is to say, the second request information can be sent by the issuing node to the blockchain node, or by the first user node to the blockchain node. Correspondingly, the blockchain node may respond to the on-chain request sent by the issuing node, or may respond to the on-chain request sent by the first user node, which is not limited in the embodiments of the present disclosure.

It should be noted that the issuing node can also act as a blockchain node in the blockchain system, to receive credential on-chain requests sent by a user node. Specifically, the issuing node can perform identity verification on the user node that requests the credential to be on-chain, and after the identity verification of the user node is passed, the credential for the user node is stored in the block of the current issuing node.

Herein, the credential on-chain request may include a credential for the user node, and the issuing node can verify the identity of the user node according to the credential for the user node carried in the credential on-chain request.

It should be noted that in a case where the issuing node act as a blockchain node in the blockchain system to receive credential on-chain requests sent by other user nodes, the credential of the user node may be generated by the issuing node or may not be generated by the issuing node, which is not limited in the embodiments of the present disclosure.

It should be understood that the issuing node can have both the issuing function and the credential on-chain function. Herein, the issuing function of the issuing node specifically refers to that the issuing node may respond to a credential generation request sent by the user node, and generate a credential for the user node after at least one of a service type, a data type, and a user identity of the user node is verified. The credential on-chain function of the issuing node specifically refers to that the issuing node can directly on-chain the credential after generating the credential, or can receive a credential on-chain request sent by the user node, after the identity verification of the user node is passed (in this case, the service type and/or data type of the user node may not be verified), on-chain the credential of the user node.

Step 240, storing, by the blockchain node, the first credential in the block in a case where the identity verification of the first user node based on the first credential is passed.

In the embodiments of the present disclosure, after receiving the second request information, the blockchain node can verify the identity of the first user node based on the first credential carried in the second request information.

Optionally, if the first credential is encrypted and/or integrity protected by a shared key, the shared key may be a shared key between the blockchain node and the issuing node, then the blockchain node may verify the first credential based on the shared key to determine whether the first credential is verified.

Optionally, if the first credential includes a second digital signature, the blockchain node can acquire a public key of the issuing node, and use the public key of the issuing node to verify the second digital signature to obtain second verification information. If the second verification information is consistent with the information in the first credential except the second digital signature, the blockchain node can determine that the verification of the first credential is passed. If the second verification information is different from the information in the first credential except for the second digital signature, the blockchain node can determine that the verification of the first credential is not passed.

Optionally, the blockchain node can maintain a public key list, which can store the identification information of each issuing node in the blockchain system (i.e., each blockchain node in the blockchain) and a public key corresponding to each issuing node. After receiving the first request information, the blockchain node can look up the public key corresponding to the identification information of the issuing node that sends the first request information from the above public key list. Further, the blockchain node can verify the second digital signature in the first credential based on the public key to obtain second verification information.

Optionally, if the first credential includes the public key of the issuing node, the blockchain node can also directly use the public key carried in the first credential to verify the first digital signature to obtain second verification information. The embodiments of the present disclosure do not limit the manner in which a blockchain node acquires the public key of an issuing node.

Optionally, in a case where the number of blockchain nodes in the blockchain system that pass the verification of the first credentials exceeds a first number, the multiple blockchain nodes that pass the verification of the first credentials may add the first credentials to the block of the blockchain system through a consensus algorithm to realize distributed storage of the first credentials of the first user node, where the first number may be configured by a network or specified by a protocol, which are not limited in the embodiments of the present disclosure.

That is to say, the first credential is stored in the block of the blockchain system only in a case where more than a certain number of blockchain nodes in the blockchain system pass the verification of the first credential, which ensures that the blockchain nodes in the blockchain system reach a consensus on the storage of the first credential.

Optionally, referring to FIG. 4, the security implementation method provided by an embodiment of the present disclosure may further include the following steps.

Step 250, sending, by the blockchain node, storage location information, where the storage location information is used to indicate a storage location of the first credential in the block.

It can be understood that after the blockchain node stores the first credential in the block, the storage location of the first credential can be fed back to the issuing node through the storage location information.

Optionally, if the issuing node requests to on-chain the first credential (i.e., the second request information is sent by the issuing node), the blockchain node can send the above storage location information to the issuing node. If the first user node requests to on-chain the first credential (i.e., the second request information is sent by the first user node), the blockchain node can send the above storage location information to the first user node.

Optionally, in a case where the issuing node requests to on-chain the first credential, the following step 260 may be further included after the above step 250.

Step 260, sending, by the issuing node, the first credential and/or storage location information to the first user node.

In the embodiments of the present disclosure, after the issuing node acquires the storage location information of the first credential, the issuing node can send the first credential and/or the storage location information to the first user node. In this way, in a case where the first user node communicates with other user nodes, the first user node can send the first credential and/or the storage location information of the first credential to other user nodes, so that other user nodes can verify the identity of the first user node according to the first credential and/or the storage location information of the first credential. In this way, data security is ensured during the communication and interaction process of user nodes.

Optionally, in an embodiment of the present disclosure, in a case where the issuing node sends second request information to the blockchain node, the first request information may further include a second credential; the second credential is used to verify whether the issuing node has a first authority, that is, an authority to generate a credential.

In the embodiments of the present disclosure, in order to prevent a third-party attacker from masquerading as the issuing node to request the storage of an illegal credential in the blockchain, the issuing node may further carry a second credential of the issuing node in the second request information to prove that the issuing node has the authority to generate (or referred to as issue) a credential for the user node.

Optionally, the second credential may include at least one of the following information:
identification information of the issuing node;
a public key of the issuing node;
second data identification information, where the second data identification information is used to indicate a data type supported by the issuing node;
second service identification information, where the second service identification information is used to indicate a service type supported by the issuing node;
a joint public key, where the joint public key is jointly generated by multiple committee nodes based on private key sharding of multiple committee nodes;
identification information of each committee node of the multiple committee nodes; or
a third digital signature, where the third digital signature is obtained through a joint signature of the multiple committee nodes.

Optionally, based on the embodiment shown in FIG. 4, in a case where the second request information includes the second credential, referring to FIG. 5, the following steps may be further included before step 240.

Step 270, verifying, by the blockchain node, whether the issuing node has the first authority based on the second credential.

Step 280, verifying, by the blockchain node, the identity of the first user node based on the first credential in a case where it is determined that the issuing node has the first authority.

It can be understood that the blockchain node can perform double verification. On the one hand, the blockchain node may verify, based on the second credentials carried in the second request information, whether the issuing node that sends the second request information has the authority to generate (or referred to as issue) a credential. On the other hand, after determining that the issuing node has the authority to generate the credential, the blockchain node may verify the identity of the first user node based on the first credential carried in the second request information to determine whether the first user node is a trusted node. Only after the issuing node has the first authority and the identity verification of the first user node is passed, the blockchain node stores the to-be-stored first credential on the chain in response to the second request information. In this way, it is ensured that the credentials stored in the block are all legitimate credentials, and thus, data security is improved.

The following is a detailed introduction to the verification process of blockchain nodes.

First, the blockchain node can verify whether the issuing node has the first authority based on the second credential in the second request information.

Optionally, if the second credential includes a third digital signature, the blockchain node can use the joint public key to verify the third digital signature to obtain third verification information. In a case where the third verification information is consistent with other information included in the second credential, it can be considered that the issuing node has the first authority, that is, the authority to generate (or referred to as issue) a credential. In a case where the third verification information is different from other information included in the second credential, it can be considered that the issuing node does not have the first authority. In this case, the blockchain node may refuse to respond to the first request information sent by the issuing node and does not store the first credential of the first user node on the chain.

Optionally, the above third digital signature may be obtained by jointly signing by multiple committee nodes using their own private key sharding. In some embodiments, the blockchain node may internally store in advance the joint public key of the multiple committee nodes in the two-layer identity management architecture. In a case where the blockchain node receives the first request information from the issuing node, the blockchain node may verify the third digital signature according to the stored joint public key in advance to obtain third verification information. In some other embodiments, if the second credential of the issuing node includes a joint public key, the issuing node may first acquire the joint public key in the second credential, and use the joint public key to verify the third digital signature to obtain third verification information.

In an example, if the third digital signature is obtained by multiple committee nodes based on the SM2 joint threshold issuance algorithm, the blockchain node can use the joint public key and basic public parameters of elliptic curve parameters to verify the second credential. Herein, the third digital signature includes (r, s), r and s are both integers, and the basic public parameters of the elliptic curve may include a base point G of the elliptic curve, where the specific verification process may include the following steps.

Step 1, calculating t=r+s. If t takes the value 0, it means that the third digital signature does not pass the verification. If t takes the value of not 0, proceed to perform step 2.

Step 2, calculating the coordinate (x, y) of a reference point in the elliptic curve, where (x,y)=s*G+t*P, P is a joint public key.

Step 3, calculating R=e+x, where e is a message digest, obtained by performing a hash operation on other information in the second credential except the third digital signature. R can also be understood as the third verification information.

Step 4, verifying whether R and r are equal. If R=r, it is determined that the second credential verification is passed and the issuing node has the first authority to generate a credential. Otherwise, the second credential verification is failed and the issuing node does not have the first authority.

In another example, if the third digital signature is obtained by multiple committee nodes based on the SM2 joint threshold issuance algorithm, the blockchain node can use the joint public key and basic public parameters of an elliptic curve to verify the second credential. Herein, the third digital signature includes (r, s), r and s are both integers, and the basic public parameters of the elliptic curve may include q and g, q is a prime order, and g is a generator corresponding to a cyclic group of the prime order q, where the specific verification process may include the following steps.

Step 1, verifying whether r and s are parameters in Zq.

Step 2, calculating *R=g*^{*ms*⁻¹mod}*^{q} y*^{*rs*⁻¹mod*_{q}*}, where y is a joint public key, and m is a message digest, which is obtained by performing a hash operation on other information in the second credential except the third digital signature. R can also be understood as the third verification information.

Step 3, verifying whether the hash operation result of R is equal to r. If the hash operation result of R and r. are equal, it can be determined that the second credential verification is passed and the issuing node has the first authority to generate a credential. Otherwise, it is determined that the second credential verification is failed and the issuing node does not have the first authority.

In the embodiments of the present disclosure, after verifying that the issuing node has the first authority based on the second credential, the blockchain node can continue to verify the identity of the first user node based on the first credential.

It should be noted that the blockchain node verifies the first credential in the same manner as described in step 240, which will not be repeated herein for the sake of brevity.

From the above description, it can be seen that the blockchain node can acquire the public key of the issuing node from the public key list which is maintained by the blockchain node, and verify the second digital signature in the first credential to determine whether the identity verification of the first user node is passed. In addition, the blockchain node can also obtain the public key of the issuing node from the first credential to verify the second digital signature, so as to determine whether the identity verification of the first user node is passed.

In addition, the second credential may also include a public key of the issuing node. In an embodiment of the present disclosure, if the second credential includes the public key of the issuing node, after passing the verification of the second credential in step 290, the blockchain node can also acquire the public key of the issuing node from the second credential, and use the public key of the issuing node to verify the second digital signature in the first credential to determine whether the identity verification of the first user node is passed.

That is to say, in step 290, in a case where it is determined that the issuing node has the first authority, the identity verification of the first user node is performed based on the first credential, which can also be implemented in the following manner:
in a case where the blockchain node determines that the issuing node has the first authority, acquiring the public key of the issuing node from the second credential; and
verifying the first credential based on the public key of the issuing node to determine whether the identity verification of the first user node is passed.

That is to say, the blockchain node may determine that the data in the second credential is trusted and untampered data after the verification of the second credential is passed. Furthermore, the blockchain node may acquire the public key of the issuing node that is trusted and untampered in the second credential to verify the to-be-stored first credential. In this way, data security can be improved.

Optionally, in an embodiment of the present disclosure, in step 270, the blockchain node verifies whether the issuing node has the first authority based on the second credential, which can also be implemented in the following manner:
determining, by the blockchain node, whether the second credential is revoked; and
verifying whether the issuing node has the first authority based on the second credential in a case where the second credential is not revoked.

In the embodiments of the present disclosure, before verifying the second credential of the issuing node, the blockchain node further needs to verify whether the second credential has been revoked.

In the two-layer identity management architecture provided by the embodiments of the present disclosure, the number of issuing nodes is limited and the issuing nodes are relatively stable nodes, so the revocation status of the credentials of the issuing nodes can be managed by constructing a revocation list.

Optionally, multiple committee nodes can jointly maintain a revocation list to record the revoked credentials of issuing nodes to prevent the revoked credentials from being illegally used by criminals. In a case where the credential of a signing node is revoked, the committee node can add the credential of the issuing node to the revocation list. Since all revoked credentials of issuing nodes are added to the revocation list, in a case where the second credential is verified, the blockchain node can first search the revocation list to check whether the second credential is in the revocation list. If the second credential is in the revocation list, it means that the second credential is revoked; if the second credential is not in the revocation list, it means that the second credential is not revoked.

It can be understood that only in a case where the second credential is not revoked can the blockchain node verify whether the issuing node has the first authority based on the second credential. In this way, the revoked credentials can be prevented from being illegally used by criminals, and the security of the usage of the credentials can be improved.

In an embodiment of the present disclosure, the issuing node with the first authority can not only generate credentials for multiple user nodes which is managed by the issuing node, but also manage the revocation of credentials of user nodes.

Due to the huge number of user nodes, using traditional revocation lists to manage the revocation of credentials of issuing nodes will bring a lot of computation and communication overhead. Therefore, in the embodiments of the present disclosure, the issuing node can generate a revocation factor in the process of generating credentials for user nodes. The issuing node can use the revocation factor in the credential of each user node to manage the revocation of credentials of multiple user nodes.

Optionally, each issuing node may maintain a parameter X, where the parameter X may be a product of revocation factors corresponding to all revoked credentials of user nodes among the credentials of the user node managed by the issuing node. The issuing node can use the parameter X to record the revocation factors of the credentials of the revoked user nodes.

In the embodiments of the present disclosure, each issuing node will periodically update the parameter X to ensure that the credentials of the revoked user nodes cannot continue to be used.

Optionally, the issuing node may update the parameter X according to a time period, or the issuing node may update the parameter X in a case where it detects that the credentials of any user node among the multiple user nodes managed by the issuing node have changed, which are not limited in the embodiments of the present disclosure.

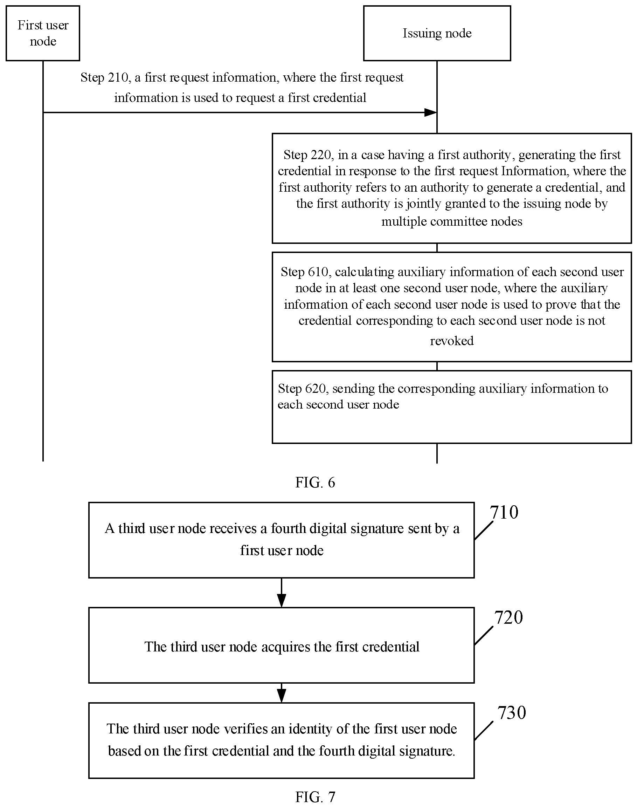

Optionally, in the embodiments of the present disclosure, referring to FIG. 6, the security implementation method provided by the embodiments of the present disclosure may further include the following steps.

Step 610, calculating, by the issuing node, auxiliary information of each second user node in at least one second user node, where the auxiliary information of each second user node is used to prove that a credential corresponding to each second user node is not revoked, and the at least one second user node is a user node whose credential is not revoked among the multiple user nodes managed by the issuing node.

Step 620, sending, by the issuing node, corresponding auxiliary information to each second user node.

It should be understood that the data on the blockchain will always be stored on the chain and will not be deleted, and thus a proof needs to be given to tell the verifier that the credential is still valid. Based on this, the issuing node can calculate auxiliary information for each user node (i.e., the second user node) whose credential is not revoked, and send the calculated auxiliary information to the corresponding user node. In this way, the user node can use the auxiliary information to prove that its own credential is not revoked.

In the embodiments of the present disclosure, the at least one second user node may include the first user node, or may not include the first user node, which is not limited in the embodiments of the present disclosure.

Optionally, the issuing node may calculate the auxiliary information of each second user node based on information such as parameter X, revocation factor of each second user node, and an attribute parameter of a RSA accumulator, where different auxiliary information corresponds to different second user nodes.

Optionally, the issuing node may calculate auxiliary information for each second user node each time data is updated or when a credential is issued for a certain user node for the first time.

Exemplarily, the issuing node may calculate the auxiliary information (a, d) for each second user node according to the time period for updating the parameter X. In a case where a user node applies for a credential from the issuing node, the issuing node generates the credential and then uses the information of the current revoked credential to generate auxiliary information (a, d) for itself. The issuing node may also calculate auxiliary information for each second user node in a case where it detects a credential of any user node among the multiple user nodes managed by the issuing node has changed, which is not limited in the embodiments of the present disclosure.

It should be understood that in a case where each second user node communicates with other user nodes, the each second user node can send auxiliary information corresponding to the second user node to other nodes, so that other nodes can use the auxiliary information to quickly verify whether the credential of the current second user node is not revoked. In this way, in a case where the number of user nodes is huge, using auxiliary information to verify whether the credential is revoked can effectively improve the efficiency of credential verification.

The verification process between user nodes is described in detail below.

Referring to FIG. 7, an embodiment of the present disclosure further provides a security implementation method, which includes but is not limited to the following steps.

Step 710, receiving, by a third user node, a fourth digital signature sent by a first user node, wherethe fourth digital signature is calculated based on a private key of the first user node.

Step 720, acquiring, by the third user node, the first credential of the first user node, where the first credential is generated by an issuing node with a first authority, the first authority refers to an authority capable of generating a credential, and the first authority is jointly granted to the issuing node by multiple committee nodes.

Step 730: verifying, by the third user node, an identity of the first user node based on the first credential and the fourth digital signature.

It should be understood that step 710 to step 730 may be applied to a scenario where the first user node and the third user node communicate with each other. Exemplarily, before data transmission is performed between the first user node and the third user node, the third user node may use the fourth digital signature sent by the first user node to verify the identity of the first user node to prevent the data from being tampered with or stolen by criminals.

In the embodiments of the present disclosure, the third user node can act as a credential verifier. In a case where the first user node and the third user node communicate with each other, the first user node may provide the third user node with a fourth digital signature. In this way, the third user node can use the fourth digital signature to verify the identity of the first user node, and further, can communicate with the first user node only in a case where the identity verification of the first user node is passed, thereby ensuring the security of data transmission during the communication process.

Herein, the fourth digital signature is obtained by performing a signature operation on the relevant information of the first user node according to the private key of the first user node.

Optionally, the fourth digital signature is obtained by the first user node performing a signature operation on at least one of the following based on the private key of the first user node:
identification information of the first user node;
a public key of the first user node;
first service identification information, where the first service identification information is used to indicate a service type supported by the first user node;
first data identification information, where the first data identification information is used to indicate a data type supported by the first user node; or
a first credential.

It should be understood that the first user node can use its own private key to encrypt the above information to obtain the fourth digital signature. The first user node may also first calculate a message digest of the above information, and then use its own private key to encrypt the message digest to obtain a fourth digital signature. The embodiments of the present disclosure do not limit the method for calculating the fourth digital signature.

In the embodiments of the present disclosure, after the third user node receives the fourth digital signature, the third user node can also acquire the first credential of the first user node. The first credential may be sent by the first user node to the third user node, or may be stored in advance by the third user node, or may be acquired by the third user node from a storage block of the blockchain system, which is not limited in the embodiments of the present disclosure.

Optionally, in some embodiments, acquiring, by the third user node, the first credential of the first user node in step 720 may be implemented in the following manner:
receiving, by the third user node, storage location information sent by the first user node; the storage location information is used to indicate a storage location of the first credential of the first user node in a block of the blockchain system; and
acquiring, by the third user node, the first credential from the block based on the storage location information.

It should be understood that after the issuing node generates the first credential, the first credential can be uploaded to the block of the blockchain system for storage, and the issuing node can acquire the storage location information of the first credential in the block. Herein, the process of the issuing node storing the first credential on the chain is detailed in the description of the above embodiments, which will not be repeated herein for the sake of brevity.

In addition, in a case where the issuing node issues the first credential to the first user node, the first credential and the storage location information of the first credential may be sent to the first user node.

Based on this, before the first user node and the third user node perform data transmission, the first user node may provide the third user node with the fourth digital signature and the storage location information of the first credential. In this way, the third user node acquires the first credential of the first user node from the block of the blockchain node based on the storage location information, and then verifies the fourth digital signature based on the first credential to determine whether the identity of the third user node is legitimate.

That is to say, in a case where two user nodes verify each other, the two user nodes can acquire each other's credentials from the blocks of the blockchain node for identity verification, thus achieving distributed authentication and improving authentication efficiency. Furthermore, user nodes do not need to store the credentials of the other user node in advance, thereby reducing computational complexity.

Optionally, the first credential includes at least one of:
identification information of the first user node;
a public key of the first user node;
first service identification information, where the first service identification information is used to indicate a service type supported by the first user node;
first data identification information, where the first data identification information is used to indicate a data type supported by the first user node;
a revocation factor, where the revocation factor is used to prove whether the first credential is revoked;
identification information of the issuing node;
a public key of the issuing node; or
a second digital signature, where the second digital signature is obtained by signing other information in the first credential based on a private key of the issuing node.

It should be understood that the fourth digital signature is obtained by the first user node signing the relevant information of the first user node based on its private key. Therefore, after receiving the fourth digital signature, the third user node can use the public key of the first user node to verify the fourth digital signature.

Optionally, in some embodiments, verifying, by the third user node, an identity of the first user node based on the first credential and the fourth digital signature in step 730, can be implemented in the following manner:
acquiring, by the third user node, the public key of the first user node in the first credential;
vertifying, by the third user node, the fourth digital signature based on the public key of the first user node to obtain a fourth verification information; and
verifying, by the third user node, an identity of the first user node based on the fourth verification information.

It can be understood that the third user node can use the public key of the first user node carried in the first credential to verify the fourth digital signature and obtain fourth verification information. Furthermore, the third user node may use the fourth verification information to perform identity verification on the first user node to determine whether the first user node is a legitimate user node.

In a possible implementation manner, the verifying, by the third user node, the identity of the first user node based on the fourth verification information can be implemented in the following manner:
in a case where the fourth verification information is consistent with the information in the first credential, determining, by the third user node, that the identity verification of the first user node is passed.

It can be understood that the third user node, as the verifier, can use the storage location information sent by the first user node to obtain the first credential from the block of the blockchain node, and then use the public key in the first credential to decrypt the fourth digital signature to obtain the fourth verification information. In this way, after obtaining the fourth verification information, the third user node can compare the fourth verification information with the information in the first credential. In a case where the fourth verification information is consistent with the information in the first credential, it means that the fourth digital signature is generated by the first user node and the fourth digital signature is authentic. In this case, the third user node can determine that the identity verification of the first user node is passed. Otherwise, the third user node determines that the first user node identity verification is not passed.

In another possible implementation, verifying, by the third user node, an identity of the first user node based on the first credential and the fourth digital signature in step 730 can also be implemented in the following manner:
receiving, by the third user node, the reference information sent by the first user node.

Herein, the reference information includes a first value and a second value; the first value is the value of a leaf node adjacent to the leaf node corresponding to the first user node in a Merkle tree, and the second value is a value of a remaining non-leaf node in the Merkle tree except non-leaf nodes to which the leaf node corresponding to the first user node belongs; the Merkle tree is constructed by the issuing node based on a credential of at least one second user node, and the at least one second user node is an unrevoked user node among multiple user nodes managed by the issuing node; the at least one second user node includes the first user node.

Accordingly, verifying, by the third user node, an identity of the first user node based on the fourth verification information can be implemented in the following manner:
acquiring, by the third user node, a value of a root node in the Merkle tree;
generating, by the third user node, a verification value based on the first value, the second value and the fourth verification information; and
if the verification value is consistent with the value of a root node, determining, by the third user node, that the identity verification of the first user node is passed.

It should be understood that after the issuing node generates the first credential, the issuing node can construct a Merkle tree based on the first credential and the credentials of other user nodes that is not revoked, then determine the above-mentioned reference information based on the values of the leaf nodes and non-leaf nodes in the constructed Merkle tree, and send the obtained reference information to the first user node.

Herein, constructing, by the issuing node, the Merkle tree and determining, by the issuing node, the calculation method of the reference information is as follows:
constructing, by the issuing node, a Merkle tree based on a credential of each second user node in the at least one second user node, where the value of each leaf node in the Merkle tree is determined based on the credential of each second user node, at least one second user node is a user node whose credential is not revoked among the multiple user nodes managed by the issuing node, and the at least one second user node may include the above-mentioned first user node; and
sending, by the issuing node, reference information to the first user node, the reference information including a first value and a second value, where the first value is a value of a leaf node adjacent to a leaf node corresponding to the first user node in the Merkle tree, and the second value is a value of a remaining non-leaf node in the Merkle tree except non-leaf nodes to which the leaf node corresponding to the first user node belongs.

Optionally, the issuing node may perform a hash operation on the credential of each second user node, and use the hashed credentials as the value of a leaf node of the Merkle tree. The issuing node can merge the values of two adjacent leaf nodes in the Merkle tree, and continue to perform hash operation on the merged result to obtain a non-leaf node in the Merkle tree, continue to merge the values of two adjacent non-leaf nodes, and continue to perform hash operation on the merged result until the value of the root node of the Merkle tree is obtained.

That is to say, among the multiple user nodes managed by the issuing node, each user node whose credential is not revoked corresponds to a leaf node in the Merkle tree, and the value of the leaf node is a hash value of the credential of the corresponding user node.

In the embodiments of the present disclosure, the first user node acts as a user node whose credential is not revoked, and the issuing node may use the values of the leaf nodes adjacent to the leaf node corresponding to the first user node, as well as the values of other non-leaf nodes in the Merkle tree except the non-leaf nodes to which the leaf node corresponding to the first user node belongs, as reference information.

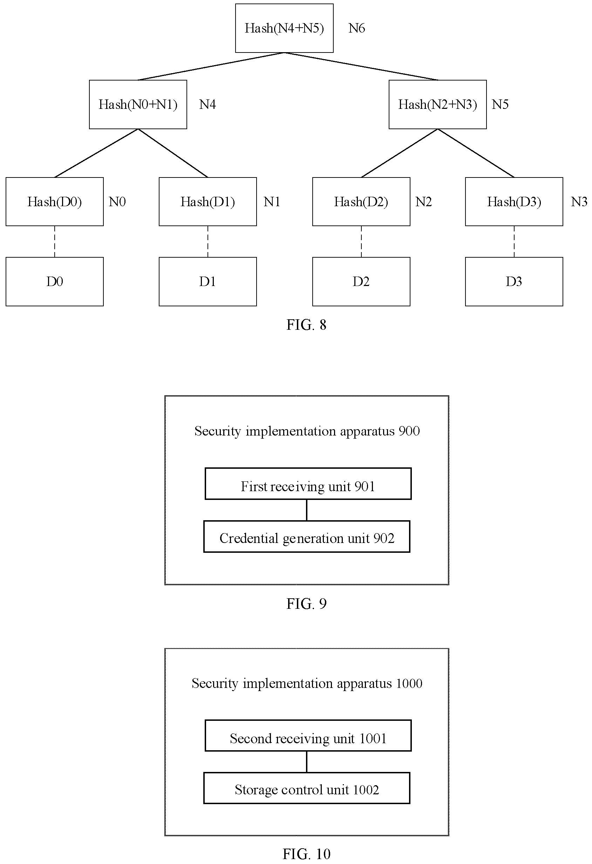

Exemplarily, the user nodes for which credentials are not revoked include four, namely, user node 0, user node 1, user node 2, and user node 3. Herein, a credential generated by the issuing node for user node 0 is D0, a credential generated by the issuing node for user node 1 is D1, a credential generated by the issuing node for user node 2 is D2, and a credential generated by the issuing node for user node 3 is D3. The Merkle tree constructed by the issuing node based on D0-D3 is shown in reference FIG. 8, and the Merkle tree includes four leaf nodes N0 to N3. Herein, the value of leaf node N0 is the value of D0 after hash operation, that is, Hash(D0), the value of leaf node N1 is the value of D1 after hash operation, that is, Hash(D1), and so on, the value of leaf node N2 is Hash(D2), and the value of leaf node N3 is Hash(D3). In addition, the Merkle tree shown in FIG. 8 further includes two non-leaf nodes N4 and N5, where the value of the non-leaf node N4 is a result of merging the values of the leaf nodes N0 and N1 and performing a hash operation on the merged value, namely Hash(N0+N1). The value of the non-leaf node N5 is a result of merging the values of the leaf nodes N2 and N3 and performing a hash operation on the merged value, namely Hash(N2+N3). The Merkle tree shown in FIG. 8 further includes a root node N6, where the value of N6 is a result of merging the values of non-leaf nodes N4 and N5 and performing a hash operation on the merged value, namely Hash(N4+N5). The reference information of user node 0 may include the value of N1 and the value of N5, the reference information of user node 1 may include the value of N0 and the value of N5, the reference information of user node 2 may include the value of N3 and the value of N4, and the reference information of user node N3 may include the value of N2 and the value of N4.

Optionally, the issuing node may construct a Merkle tree with the credentials of all unrevoked user nodes as leaf nodes in a case where parameter X is updated or auxiliary information (a, d) for each user node with an unrevoked credential is calculated, and determine reference information of each unrevoked user node based on the Merkle tree.

Optionally, the issuing node may send reference information to each unrevoked user node in a case where parameter X is updated or auxiliary information (a, d) for each user node with an unrevoked credential is calculated.

It should be understood that in the embodiments of the present disclosure, in a case where the third user node needs to authenticate the first user node, the first user node can send reference information of the first user node to the third user node, so that the third user node can verify the authenticity of the fourth digital signature based on the reference information, thereby determining whether the identity verification of the first user node is passed.

Optionally, the issuing node may disclose the value of the root node of the Merkle tree each time after constructing the Merkle tree.

In the embodiments of the present disclosure, the third user node can acquire the value of the root node of the Merkle tree published by the issuing node. In addition, the third user node may calculate the verification value according to the first value and the second value included in the reference information, and the fourth verification information. The third user node may use the hash operation result of the fourth verification information as the value of the leaf node corresponding to the first user node, and then calculate the verification value according to the structure of the Merkle tree in combination with the first value and the second value. Herein, the process of calculating the verification value by the issuing node is similar to the process of calculating the root node of the Merkle tree. The values of the two adjacent leaf nodes in the Merkel tree can be merged and the merged result continues to perform the hash operation to obtain the non-leaf nodes of the Merkel tree. The process of merging the values of two adjacent non-leaf nodes is continued and the merged result is continued to perform the hash operation processing until a verification value is obtained.

After obtaining the verification value, the third user node may compare the verification value with the value of the root node of the Merkle tree published by the issuing node. In a case where the two are consistent, it means that the fourth digital signature is generated by the first user node and the fourth digital signature is authentic. In this case, the third user node can determine that the identity verification of the first user node is passed. Otherwise, the third user node determines that the first user node identity verification is not passed.

Optionally, if the fourth digital signature includes first service identification information and/or first data identification information, before the third user node verifies the identity of the first user node based on the first credential and the fourth digital signature, the third user node further needs to determine whether a service type indicated by the first service identification information and/or a data type indicated by the first data identification information is supported.

Optionally, after the third user node receives the fourth digital signature, the third user node may compare the service type corresponding to the first service identification information in the fourth digital signature with the service type provided by itself. If the service type provided by the third user node includes the service type corresponding to the first service identification information, the third user node determines that the service type indicated by the first service identification information is supported.

Optionally, after the third user node receives the fourth digital signature, the third user node may compare the data type indicated by the first data identification information in the fourth digital signature with the data type provided by itself. If the data type provided by the third user node includes the data type indicated by the first data identification information, it is determined that the third user node supports the data type indicated by the first data identification information.

It can be understood that only after confirming that the service type and/or data type of the first user node is supported, the third user node performs identity verification of the first user node based on the first credential and the fourth digital signature. If the issuing node does not support the service type indicated by the first service identification information and does not support the data type indicated by the first data identification information, the third user node may ignore the fourth digital signature and refuse to perform data exchange with the first user node.

In an embodiment of the present disclosure, the third user node may also verify whether the first credential of the first user node is revoked after the identity verification of the first user node based on the first credential and the fourth digital signature is passed, that is, verify whether the first credential is valid, and prevent the revoked credentials from being illegally used by criminals.

In the embodiment of the present disclosure, the issuing node may generate auxiliary information (a, d) for each user node whose credential is not revoked. Herein, the auxiliary information (a, d) is calculated and generated for each unrevoked credential each time the issuing node updates data (or the first credential is issued), and then sent to the corresponding credential owner respectively.

It should be noted that the specific generation process of the auxiliary information (a, d) is detailed in the description of the above embodiment, and will not be repeated herein for the sake of brevity. In addition, after generating the auxiliary information, the issuing node can send the corresponding auxiliary information to each user node whose credential is not revoked.

In this way, in a case where the third user node performs identity verification on the first user node, the first user node may send the auxiliary information of the first user node to the third user node.

Optionally, the third user node may verify whether the first credential is revoked based on the auxiliary information of the first user node. Specifically, the third user node can verify whether the first credential is revoked based on the auxiliary information, the parameter X maintained by the issuing node, and the RSA accumulator parameter.

In summary, in the second layer identity management architecture, the issuing node can implement the issuance, revocation, and verification of user node credentials. Herein, the issuing nodes jointly maintain a blockchain for storing credentials of light nodes. By utilizing the principle of RSA accumulator, the revocation and verification of user node credentials have been realized. It can be seen that in the case of a large number of user nodes, in a case where two user nodes verify each other, acquiring user node credentials from blockchain nodes can achieve distributed authentication and improve authentication efficiency. At the same time, user nodes do not need to store multiple user credentials in advance, which can reduce complexity.

The preferred embodiments of the present disclosure are described in detail above in conjunction with the accompanying drawings, however, the present disclosure is not limited to the specific details in the above embodiments, and a variety of simple variations of the technical solution of the present disclosure may be carried out within the technical conception of the present disclosure, and all of these simple variations all fall within the scope of protection of the present disclosure. For example, the various specific technical features described in the above-described specific embodiments may be combined in any suitable manner without contradiction, and in order to avoid unnecessary repetition, the various possible combinations are not separately described in the present disclosure. For another example, the various different embodiments of the present disclosure can be combined in any way, and as long as they do not contradict the idea of the present disclosure, they should be regarded as the contents disclosed in the present disclosure. For another example, under the premise of no conflict, the various embodiments and/or the technical features in the various embodiments described in the present disclosure may be arbitrarily combined with the prior art, and the technical solution obtained after the combination should also fall within the protection scope of the present disclosure.

It should also be understood that in the various method embodiments of the present disclosure, the size of the serial numbers of the above-mentioned processes does not imply the order of execution. The execution order of each process should be determined by its function and internal logic, and should not constitute any limitation on the implementation process of the embodiments of the present disclosure. In addition, in the embodiments of the present disclosure, the terms "downlink", "uplink" and "sidelink" are used to indicate the transmission direction of signals or data, where "downlink" is used to indicate that the transmission direction of signals or data is a first direction from a station to a user device of a cell, "uplink" is used to indicate that the transmission direction of signals or data is a second direction from a user device of a cell to a station, and "sidelink" is used to indicate that the transmission direction of signals or data is a third direction from user device 1 to user device 2. For example, "downlink signal" indicates that the transmission direction of the signal is a first direction. In addition, in the embodiments of the present disclosure, the term "and/or" is only an association relationship to describe associated objects, which means that there may be three kinds of relationships. Specifically, A and/or B may represent three cases that: A exists alone, both A and B exist, and B exists alone. In addition, a character "/" herein generally means that related objects before and after "/" are in an "or" relationship.

FIG. 9 is a schematic diagram 1 of the structural composition of a security implementation apparatus, provided by the embodiments of the present disclosure, which is applied to an issuing node. As shown in FIG. 9, the security implementation apparatus 900 includes:
a first receiving unit 901, configured to receive first request information sent by a first user node, where the first request information is used to request a first credential, and the first credential is used to verify an identity of the first user node; and
a credential generation unit 902, configured to generate the first credential in response to the first request information in a case where the issuing node has the first authority, where the first authority refers to an authority capable of generating a credential, and the first authority is jointly granted to the issuing node by multiple committee nodes.

Optionally, the first request information includes at least one of:
identification information of the first user node;
a public key of the first user node;
first service identification information, where the first service identification information is used to indicate a service type supported by the first user node;
first data identification information, where the first data identification information is used to indicate a data type supported by the first user node; or
a first digital signature, where the first digital signature is obtained by signing other information in the first request information according to a private key of the first user node.

Optionally, the credential generation unit 902 is further configured to generate a revocation factor; generate the first credential based on the revocation factor, the revocation factor is used to prove whether the first credential is revoked.

Optionally, the first credential includes at least one of the following information:
identification information of the first user node;
a public key of the first user node;
first service identification information, where the first service identification information is used to indicate a service type supported by the first user node;
first data identification information, where the first data identification information is used to indicate a data type supported by the first user node;
a revocation factor, where the revocation factor is used to prove whether the first credential is revoked;
identification information of the issuing node;
a public key of the issuing node; or
a second digital signature, where the second digital signature is obtained by signing other information in the first credential based on a private key of the issuing node.

Optionally, the issuing node is a node in a blockchain system, and the security implementation apparatus 900 also includes a first sending unit, which is configured to send second request information to other blockchain nodes in the blockchain system; the second request information includes the first credential, and the second request information is used to request that the first credential be stored in a block of the blockchain system.

Optionally, the second request information also includes a second credential, where the second credential is used to verify whether the issuing node has the first authority.

Optionally, the second credential includes at least one of the following information:
identification information of the issuing node;
a public key of the issuing node;
second data identification information, where the second data identification information is used to indicate a data type supported by the issuing node;
second service identification information, where the second service identification information is used to indicate a service type supported by the issuing node;
a joint public key, where the joint public key is jointly generated by multiple committee nodes based on private key sharding of multiple committee nodes;
identification information of each committee node of the multiple committee nodes; or
a third digital signature, where the third digital signature is obtained through a joint signature of the multiple committee nodes.

Optionally, the first receiving unit 901 is further configured to obtain storage location information; the storage location information is used to indicate a storage location of the first credential in the block; and
the first sending unit is further configured to send the first credential and/or the storage location information to the first user node.

Optionally, the security implementation apparatus 900 further includes a calculation unit, configured to calculate auxiliary information of each second user node in at least one second user node; where the auxiliary information of each second user node is used to prove that a credential corresponding to each second user node is not revoked, and the at least one second user node is a user node whose credential is not revoked among the multiple user nodes managed by the issuing node; and
the first sending unit is further configured to send the auxiliary information to each second user node.

Optionally, the security implementation apparatus 900 further includes a Merkle tree construction unit, configured to construct a Merkle tree based on a credential corresponding to at least one second user node; where a value of each leaf node in the Merkle tree is determined based on a credential corresponding to each second user node in the at least one second user node, and the at least one second user node is a user node whose credential is not revoked among the multiple user nodes; the at least one second user node includes the first user node; and
the first sending unit is further configured to send reference information to the first user node, the reference information including a first value and a second value, where the first value is a value of a leaf node adjacent to a leaf node corresponding to the first user node in the Merkle tree, and the second value is a value of a remaining non-leaf node in the Merkle tree except non-leaf nodes to which the leaf node corresponding to the first user node belongs.

FIG. 10 is a schematic diagram 2 of the structure of a security implementation apparatus, provided by the embodiments of the present disclosure, which is applied to a blockchain node. As shown in FIG. 10, the security implementation apparatus 1000 includes:
a second receiving unit 1001, configured to receive second request information, the second request information being used for requesting to store a first credential, where the first credential is used to verify an identity of the first user node, the first credential is generated by the issuing node in case where the issuing node has a first authority, the first authority refers to an authority capable of generating a credential, and the first authority is granted by a committee node to the issuing node; and
a storage control unit 1002, configured to store the first credential in a block, in a case where the identity verification of the first user node based on the first credential is passed.

Optionally, the second receiving unit 1001 is further configured to receive the second request information sent by the issuing node; or receive the second request information sent by the first user node.

Optionally, the security implementation apparatus further includes a second sending unit, configured to send storage location information; the storage location information is used to indicate a storage location of the first credential in the block.

Optionally, in a case where the second request information is sent by the issuing node, the first request information further includes a second credential, where the second credential is used to verify whether the issuing node has the first authority.

Optionally, the second credential includes at least one of the following information:
identification information of the issuing node;
a public key of the issuing node;
second data identification information, where the second data identification information is used to indicate a data type supported by the issuing node;
second service identification information, where the second service identification information is used to indicate a service type supported by the issuing node;
a joint public key, where the joint public key is jointly generated by multiple committee nodes based on private key sharding of multiple committee nodes;
identification information of each committee node of the multiple committee nodes; or
a third digital signature, where the third digital signature is obtained through a joint signature of the multiple committee nodes.

Optionally, the security implementation apparatus 1000 also includes a second verification unit, configured to verify whether the issuing node has the first authority based on the second credential; in a case where the issuing node is determined to have the first authority, verify the identity of the first user node based on the first credential.

Optionally, the second credential includes the public key of the issuing node, and the second verification unit is further configured to acquire the public key of the issuing node from the second credential in a case where the issuing node is determined to have the first authority; verify the first credential based on the public key of the issuing node, so as to determine whether the identity verification of the first user node is passed.

Optionally, the second verification unit is further configured to determine whether the second credential is revoked; in a case where the second credential is not revoked, verify whether the issuing node has the first authority based on the second credential.

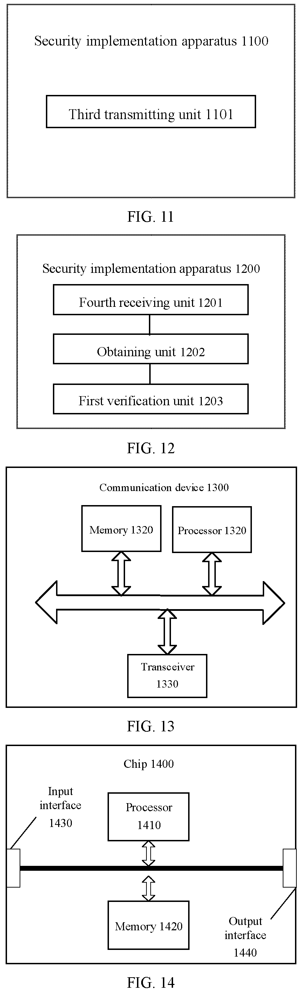

FIG. 11 is a schematic diagram 3 of the structure of the security implementation apparatus, provided by the embodiments of the present disclosure, which is applied to a third user node. As shown in FIG. 11, the security implementation apparatus 1100 includes:
a third sending unit 1101, configured to send first request information to the issuing node, where the first request information is used to request a first credential; the first credential is used to verify an identity of the first user node.

Optionally, the first request information includes at least one of:
identification information of the first user node;
a public key of the first user node;
first service identification information, where the first service identification information is used to indicate a service type supported by the first user node;
first data identification information, where the first data identification information is used to indicate a data type supported by the first user node; or
a first digital signature, where the first digital signature is obtained by signing other information in the first request information according to a private key of the first user node.

Optionally, the security implementation apparatus 1100 also includes a third receiving unit, configured to receive the first credential and/or storage location information sent by the issuing node; the storage location information is used to indicate a storage location of the first credential in the block of the blockchain system.

Optionally, the third sending unit 1101 is further configured to send second request information to the blockchain node, where the second request information is used for requesting to store the first credential.

Optionally, the first credential includes at least one of the following information:
identification information of the first user node;
a public key of the first user node;
first service identification information, where the first service identification information is used to indicate a service type supported by the first user node;
first data identification information, where the first data identification information is used to indicate a data type supported by the first user node;
a revocation factor, where the revocation factor is used to prove whether the first credential is revoked;
identification information of the issuing node;
public key of the issuing node; or
second digital signature, where the second digital signature is obtained by signing other information in the first credential based on the private key of the issuing node.

Optionally, the third receiving unit, further configured to receive auxiliary information, where the auxiliary information is used to prove that the first credential corresponding to the first user node is not revoked.

Optionally, the third receiving unit is further configured to receive reference information sent by the issuing node, the reference information including a first value and a second value, where the first value is a value of a leaf node adjacent to a leaf node corresponding to the first user node in the Merkle tree, and the second value is a value of a remaining non-leaf node in the Merkle tree except non-leaf nodes to which the leaf node corresponding to the first user node belongs;
where the Merkle tree is constructed by the issuing node based on a credential of at least one second user node, and the at least one second user node is an unrevoked user node among multiple user nodes managed by the issuing node; the at least one second user node includes the first user node.

Optionally, the third sending unit 1101 is further configured to send a fourth digital signature to a third user node, the fourth digital signature is used by the third user node to verify an identity of the first user node.

Optionally, the third sending unit 1101 is further configured to send storage location information to the third user node; the storage location information is used to indicate a storage location of the first credential of the first user node in the block of the blockchain system.

Optionally, the third sending unit 1101 is further configured to transmit reference information to the third user node; the reference information including a first value and a second value, where the first value is a value of a leaf node adjacent to a leaf node corresponding to the first user node in the Merkle tree, and the second value is a value of a remaining non-leaf node in the Merkle tree except non-leaf nodes to which the leaf node corresponding to the first user node belongs;
where the Merkle tree is constructed by the issuing node based on a credential of at least one second user node, and the at least one second user node is an unrevoked user node among multiple user nodes managed by the issuing node; the at least one second user node includes the first user node.

Optionally, the third sending unit 1101 is further configured to send auxiliary information to a third user node. The auxiliary information is used to prove that the first credential corresponding to the first user node is not revoked.

FIG. 12 is a schematic diagram 3 of the structure of the security implementation apparatus, provided by the embodiments of the present disclosure, which is applied to a third user node. As shown in FIG. 12, the security implementation apparatus 1200 includes:
a fourth receiving unit 1201, configured to receive a fourth digital signature sent by the first user node;
an acquiring unit 1202, configured to acquire a first credential of the first user node, where the first credential is generated by an issuing node with a first authority, where the first authority refers to an authority capable of generating a credential, and the first authority is jointly granted to the issuing node by multiple committee nodes; and
a first verification unit 1203, configured to verify an identity of the first user node based on the first credential and the fourth digital signature.

Optionally, the acquiring unit 1202 is further configured to receive storage location information sent by the first user node, the storage location information being used to indicate a storage location of the first credential of the first user node in a block of the blockchain system; and acquire the first credential from the block based on the storage location information

Optionally, the fourth digital signature is obtained by performing a signature operation on at least one of the following based on the private key of the first user node:
identification information of the first user node;
a public key of the first user node;
first service identification information, where the first service identification information is used to indicate a service type supported by the first user node;
first data identification information, where the first data identification information is used to indicate a data type supported by the first user node; or
a first credential.

Optionally, the first credential includes at least one of:
identification information of the first user node;
public key of the first user node;
first service identification information, where the first service identification information is used to indicate a service type supported by the first user node;
first data identification information, where the first data identification information is used to indicate a data type supported by the first user node;
a revocation factor, where the revocation factor is used to prove whether the first credential is revoked;
identification information of the issuing node;
public key of the issuing node; or
second digital signature, where the second digital signature is obtained by signing other information in the first credential based on the private key of the issuing node.

Optionally, the first verification unit 1203, also configured to acquire the public key of the first user node in the first credential; verify the fourth digital signature based on the public key of the first user node to obtain fourth verification information; and verify an identity of the first user node based on the fourth verification information.

Optionally, the first verification unit 1203 is further configured to: in a case where the fourth verification information is consistent with information in the first credential, determines that the identity verification of the first user node is passed.

Optionally, the fourth receiving unit 1201 is further configured to receive the reference information sent by the first user node. The reference information includes a first value and a second value, where the first value is a value of a leaf node adjacent to a leaf node corresponding to the first user node in the Merkle tree, and the second value is a value of a remaining non-leaf node in the Merkle tree except non-leaf nodes to which the leaf node corresponding to the first user node belongs;
where the Merkle tree is constructed by the issuing node based on a credential of at least one second user node, and the at least one second user node is an unrevoked user node among multiple user nodes managed by the issuing node; the at least one second user node includes the first user node.

Optionally, the first verification unit 1203 is configured to acquire the value of the root node in the Merkle tree; generate a verification value based on the first value, the second value and the fourth verification information; and if the verification value is consistent with the value of the root node, determine that the identity verification of the first user node is passed.

Optionally, the fourth receiving unit 1201 is further configured to receive auxiliary information sent by the first user node.

The first verification unit 1203 is further configured to verify whether the first credential is revoked based on the auxiliary information.

Those skilled in the art should understand that the relevant description of the above-mentioned security implementation apparatus in the embodiments of the present disclosure can be understood by referring to the relevant description of the security implementation method in the embodiment of the present disclosure.

FIG. 13 is a schematic structural diagram of a communication device 1300 provided by the embodiments of the present disclosure. The communication device may be a terminal device or a network device. The communication device 1300 shown in FIG. 13 includes a processor 1310, which may call a computer program from a memory and run the computer program, to implement the methods in the embodiments of the present disclosure.

Optionally, as shown in FIG. 13, the communication device 1300 may further include a memory 1320. Herein, the processor 1310 may call a computer program from the memory 1320 and run the computer program, to implement the methods in the embodiments of the present disclosure.

Herein, the memory 1320 may be a separate device independent from the processor 1310, or may also be integrated into the processor 1310.

Optionally, as shown in FIG. 13, the communication device 1300 may also include a transceiver 1330, and the processor 1310 may control the transceiver 1330 to communicate with other devices, and specifically, to send information or data to other devices, or receive information or data sent by other devices.

Herein, the transceiver 1330 may include a transmitter and a receiver. The transceiver 1330 may further include an antenna, and the number of antennas may be one or more.

Optionally, the communication device 1300 may specifically be an issuing node of the embodiments of the present disclosure, and the communication device 1300 may implement the corresponding processes implemented by the issuing node in each method of the embodiments of the present disclosure, which will not be repeated herein for the sake of brevity.

Optionally, the communication device 1300 may specifically be a blockchain node of the embodiments of the present disclosure, and the communication device 1300 may implement the corresponding processes implemented by the blockchain node in each method of the embodiments of the present disclosure, which will not be repeated herein for the sake of brevity.

Optionally, the communication device 1300 may specifically be a third user node in the embodiments of the present disclosure, and the communication device 1300 may implement the corresponding processes implemented by the third user node in each method in the embodiments of the present disclosure, which will not be repeated herein for the sake of brevity.

FIG. 14 is a schematic structural diagram of a chip of the embodiments of the present disclosure. The chip 1400 shown in FIG. 14 includes a processor 1410, the processor 1410 may call a computer program from a memory and run the computer program to implement the methods in the embodiments of the present disclosure.

Optionally, as shown in FIG. 14, the chip 1400 may further include a memory 1420. Herein, the processor 1410 may call a computer program from the memory 1420 and run the computer program to implement the methods in the embodiments of the present disclosure.

Herein, the memory 1420 may be a separate device independent from the processor 1410, or may also be integrated into the processor 1410.

Optionally, the chip 1400 may further include an input interface 1430. Herein, the processor 1410 may control the input interface 1430 to communicate with other devices or chips, and specifically, the input interface 1430 may acquire information or data sent by other devices or chips.

Optionally, the chip 1400 may further include an output interface 1440. Herein, the processor 710 may control the output interface 1440 to communicate with other devices or chips, and specifically, the output interface 1440 may output information or data to other devices or chips.

Optionally, the chip may be applied to the issuing node in the embodiments of the present disclosure, and the chip may implement the corresponding procedure implemented by the issuing node in the various methods of the embodiments of the present disclosure, which will not be repeated herein for the sake of brevity.

Optionally, the chip may be applied to the blockchain node in the embodiments of the present disclosure, and the chip may implement the corresponding procedure implemented by the blockchain node in the various methods of the embodiments of the present disclosure, which will not be repeated herein for the sake of brevity.

Optionally, the chip may be applied to the third user node in the embodiments of the present disclosure, and the chip may implement the corresponding procedure implemented by the third user node in the various methods of the embodiments of the present disclosure, which will not be repeated herein for the sake of brevity.

It should be understood that the chip mentioned in the embodiments of the present disclosure may also be called a system on chip, a system chip, a chip system or a system-on-chip chip, etc.

It should be understood that the processor in the embodiments of the present disclosure may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present disclosure may be implemented or performed. A general-purpose processor may be a microprocessor, or the processor may also be any conventional processor, etc. The steps of the method disclosed in combination with the embodiments of the present disclosure may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that, the memory in the embodiments of the present disclosure may be a volatile memory or a non-volatile memory, or may include both volatile and non-volatile memories. Herein, the non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. Through illustrative, rather than limiting, illustration, many forms of RAMs are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and the method described herein is intended to include, but not limited to, these and any other suitable types of memories.

It should be understood that the above memory is exemplary but not limiting illustration, e.g., the memory in embodiments of the present disclosure may also be a SRAM, a DRAM, a SDRAM, a DDR SDRAM, an ESDRAM, a SLDRAM, and a DR RAM. That is, the memory in the embodiments of the present disclosure is intended to include, but not limited to, these and any other suitable types of memories.

The embodiments of the present disclosure further provide a computer readable storage medium for storing a computer program.

Optionally, the computer readable storage medium may be applied to the network device in the embodiments of the present disclosure, and the computer program enables a computer to perform the corresponding procedure implemented by the network device in the various methods of the embodiments of the present disclosure, which will not be repeated herein for the sake of brevity.

Optionally, the computer readable storage medium may be applied to the mobile terminal/terminal device in the embodiments of the present disclosure, and the computer program enables a computer to perform the corresponding procedure implemented by the mobile terminal/terminal device in various methods of the embodiments of the present disclosure, which will not be repeated herein for the sake of brevity.

The embodiments of the present disclosure further provide a computer program product including a computer program instruction.

Optionally, the computer program product may be applied to the network device in the embodiments of the present disclosure, and the computer program instruction causes a computer to perform the corresponding procedure implemented by the network device in the various methods of the embodiments of the present disclosure, which will not be repeated herein for the sake of brevity.

Optionally, the computer program product may be applied to the mobile terminal/terminal device in the embodiments of the present disclosure, and the computer program instruction causes a computer to perform the corresponding procedure implemented by the mobile terminal/terminal device in various methods of the embodiments of the present disclosure, which will not be repeated herein for the sake of brevity.

The embodiments of the present disclosure further provide a computer program.

Optionally, the computer program may be applied to network device in the embodiments of the present disclosure, the computer program, upon being executed on a computer, causes the computer to perform the corresponding procedure implemented by the network device in various methods of the embodiments of the present disclosure, which will not be repeated herein for the sake of brevity.

Optionally, the computer program may be applied to the mobile terminal/terminal device in the embodiments of the present disclosure, the computer program, upon being executed on a computer, causes the computer to perform the corresponding procedure implemented by the mobile terminal/terminal device in various methods of the embodiments of the present disclosure, which will not be repeated herein for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present disclosure.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the present disclosure, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

If the described functions are implemented in the form of a software functional unit and sold or used as an independent product, they may be stored in a computer readable storage medium. Based on this understanding, the technical solution of the present disclosure essentially, or a part of the technical solution that contributes to the prior art, or a part of the technical solution, may be embodied in the form of a software product, and the computer software product is stored in a storage medium, and includes a plurality of instructions for enabling a computer device (which may be a personal computer, a server, or a network device, etc.) to perform all or some of steps of the methods described in the various embodiments of the present disclosure. And, the storage medium mentioned above includes a USB flash drive (U disk), a mobile hard disk, a ROM, a RAM, a diskette, or an optical disk, and various mediums that may store program codes.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be subject to the protection scope of the claims.

## Claims

1. A security implementation method, comprising:
receiving, by an issuing node, first request information sent by a first user node, the first request information being used to request a first credential, wherein the first credential is used to verify an identity of the first user node; and
generating, by the issuing node, the first credential in response to the first request information in a case where the issuing node has a first authority, wherein the first authority refers to an authority capable of generating a credential, and the first authority is jointly granted to the issuing node by a plurality of committee nodes.

2. The method according to claim 1, wherein the first request information comprises at least one of:
identification information of the first user node;
a public key of the first user node;
first service identification information, wherein the first service identification information is used to indicate a service type supported by the first user node;
first data identification information, wherein the first data identification information is used to indicate a data type supported by the first user node; or
a first digital signature, wherein the first digital signature is obtained by signing other information in the first request information according to a private key of the first user node.

3. The method according to claim 1 or 2, wherein generating the first credential comprises:
generating, by the issuing node, a revocation factor; and
generating, by the issuing node, the first credential based on the revocation factor, wherein the revocation factor is used to prove whether the first credential is revoked.

4. The method according to any one of claims 1 to 3, wherein the first credential comprises at least one of following information:
identification information of the first user node;
a public key of the first user node;
first service identification information, wherein the first service identification information is used to indicate a service type supported by the first user node;
first data identification information, wherein the first data identification information is used to indicate a data type supported by the first user node;
a revocation factor, wherein the revocation factor is used to prove whether the first credential is revoked;
identification information of the issuing node;
a public key of the issuing node; or
a second digital signature; wherein the second digital signature is obtained by signing other information in the first credential based on a private key of the issuing node.

5. The method according to any one of claims 1 to 4, wherein the issuing node is a node in a blockchain system, and the method further comprises:
sending, by the issuing node, second request information to other blockchain nodes in the blockchain system, wherein the second request information comprises the first credential, and the second request information is used to request that the first credential be stored in a block of the blockchain system.

6. The method according to claim 5, wherein the second request information further comprises a second credential, and the second credential is used to verify whether the issuing node has the first authority.

7. The method according to claim 6, wherein the second credential comprises at least one of following information:
identification information of the issuing node;
a public key of the issuing node;
second data identification information, wherein the second data identification information is used to indicate a data type supported by the issuing node;
second service identification information, wherein the second service identification information is used to indicate a service type supported by the issuing node;
a joint public key, wherein the joint public key is jointly generated by the plurality of committee nodes based on private key sharding of the plurality of committee nodes;
identification information of each committee node of the plurality of committee nodes; or
a third digital signature, wherein the third digital signature is obtained through a joint signature of the multiple committee nodes.

8. The method according to any one of claims 5 to 7, further comprising:
acquiring, by the issuing node, storage location information, wherein the storage location information is used to indicate a storage location of the first credential in the block; and
sending, by the issuing node, the first credential and/or the storage location information to the first user node.

9. The method according to any one of claims 1 to 8, further comprising:
calculating, by the issuing node, auxiliary information of each second user node in at least one second user node, wherein the auxiliary information of each second user node is used to prove that a credential corresponding to each second user node is not revoked, and the at least one second user node is a user node whose credential is not revoked among the plurality of user nodes managed by the issuing node; and
sending, by the issuing node, the auxiliary information to each second user node.

10. The method according to any one of claims 1 to 9, further comprising:
constructing, by the issuing node, a Merkle tree based on a credential corresponding to at least one second user node, wherein a value of each leaf node in the Merkle tree is determined based on a credential corresponding to each second user node in the at least one second user node, the at least one second user node is a user node whose credential is not revoked among the plurality of user nodes, and the at least one second user node comprises the first user node; and
sending, by the issuing node, reference information to the first user node, wherein the reference information comprises a first value and a second value, the first value is a value of a leaf node adjacent to a leaf node corresponding to the first user node in the Merkle tree, and the second value is a value of a remaining non-leaf node in the Merkle tree except non-leaf nodes to which the leaf node corresponding to the first user node belongs.

11. A security implementation method, comprising:
receiving, by a blockchain node, second request information, the second request information being used for requesting to store a first credential, and the first credential being used to verify an identity of a first user node, wherein the first credential is generated by an issuing node in a case where the issuing node has a first authority, the first authority refers to an authority capable of generating a credential, and the first authority is granted by a committee node to the issuing node; and
storing, by the blockchain node, the first credential in a block in a case where identity verification of the first user node based on the first credential is passed.

12. The method according to claim 11, wherein the receiving, by a blockchain node, second request information comprises:
receiving, by the blockchain node, the second request information sent by the issuing node; or
receiving, by the blockchain node, the second request information sent by the first user node.

13. The method according to claim 11 or 12, further comprising:
sending, by the blockchain node, storage location information, wherein the storage location information is used to indicate a storage location of the first credential in the block.

14. The method according to any one of claims 11 to 13, wherein, in a case where the second request information is sent by the issuing node, the second request information further comprises a second credential, and the second credential is used to verify whether the issuing node has the first authority.

15. The method according to claim 14, wherein the second credential comprises at least one of following information:
identification information of the issuing node;
a public key of the issuing node;
second data identification information, wherein the second data identification information is used to indicate a data type supported by the issuing node;
second service identification information, wherein the second service identification information is used to indicate a service type supported by the issuing node;
a joint public key, wherein the joint public key is jointly generated by a plurality of committee nodes based on a private key slice of the plurality of committee nodes;
identification information of each committee node of the plurality of committee nodes; or
a third digital signature, wherein the third digital signature is obtained through a joint signature of the plurality of committee nodes.

16. The method according to claim 14 or 15, further comprising:
verifying, by the blockchain node based on the second credential, whether the issuing node has the first authority; and
verifying an identity of the first user node based on the first credential in a case where it is determined that the issuing node has the first authority.

17. The method according to claim 16, wherein the second credential comprises a public key of the issuing node, and verifying the identity of the first user node based on the first credential in a case where it is determined that the issuing node has the first authority comprises:
acquiring the public key of the issuing node from the second credential in a case where it is determined that the issuing node has the first authority; and
verifying the first credential based on the public key of the issuing node, to determine whether identity verification of the first user node is passed.

18. The method according to claim 16 or 17, wherein the verifying, by the blockchain node based on the second credential, whether the issuing node has the first authority, further comprises:
determining, by the blockchain node, whether the second credential is revoked; and
verifying whether the issuing node has the first authority based on the second credential in the case where the second credential is not revoked.

19. A security implementation method, comprising:
sending, by a first user node, first request information to an issuing node, the first request information being used to request a first credential, wherein the first credential is used to verify an identity of the first user node.

20. The method according to claim 19, wherein the first request information comprises at least one of:
identification information of the first user node;
a public key of the first user node;
first service identification information, wherin the first service identification information is used to indicate a service type supported by the first user node;
first data identification information, wherein the first data identification information is used to indicate a data type supported by the first user node; or
a first digital signature, wherein the first digital signature is obtained by signing other information in the first request information according to a private key of the first user node.

21. The method according to claim 19 or 20, further comprising:
receiving, by the first user node, the first credential and/or storage location information sent by the issuing node, wherin the storage location information is used to indicate a storage location of the first credential in a block of the blockchain system.

22. The method according to any one of claim 20, further comprising:
sending, by the first user, second request information to a blockchain node, wherein the second request information is used for requesting to store the first credential.

23. The method according to any one of claims 19 to 22, wherein the first credential comprises at least one of following information:
identification information of the first user node;
a public key of the first user node;
first service identification information, wherein the first service identification information is used to indicate a service type supported by the first user node;
first data identification information, wherein the first data identification information is used to indicate a data type supported by the first user node;
a revocation factor, wherein the revocation factor is used to prove whether the first credential is revoked;
identification information of the issuing node;
a public key of the issuing node; or
a second digital signature, wherein the second digital signature is obtained by signing other information in the first credential based on a private key of the issuing node.

24. The method according to any one of claims 19 to 23, further comprising:
receiving, by the first user node, auxiliary information, wherein the auxiliary information is used to prove that the first credential corresponding to the first user node is not revoked.

25. The method according to any one of claims 19 to 24, further comprising:
receiving, by the first user node, reference information sent by the issuing node, wherein the reference information comprises a first value and a second value, the first value is a value of a leaf node adjacent to a leaf node corresponding to the first user node in the Merkle tree, and the second value is a value of a remaining non-leaf node in the Merkle tree except non-leaf nodes to which the leaf node corresponding to the first user node belongs;
wherein the Merkle tree is constructed by the issuing node based on a credential of at least one second user node, the at least one second user node is an unrevoked user node among a plurality of user nodes managed by the issuing node, and the at least one second user node comprises the first user node.

26. The method according to any one of claims 19 to 25, further comprising:
sending, by the first user node, a fourth digital signature to a third user node, wherein the fourth digital signature is used by the third user node to verify an identity of the first user node.

27. The method according to claim 26, further comprising:
sending, by the first user node, storage location information to the third user node, wherein the storage location information is used to indicate a storage location of the first credential of the first user node in a block of the blockchain system.

28. The method according to claim 26 or 27, further comprising:
sending, by the first user node, reference information to the third user node, wherein the reference information comprises a first value and a second value, the first value is a value of a leaf node adjacent to a leaf node corresponding to the first user node in the Merkle tree, and the second value is a value of a remaining non-leaf node in the Merkle tree except non-leaf nodes to which the leaf node corresponding to the first user node belongs;
wherein the Merkle tree is constructed by the issuing node based on a credential of at least one second user node, the at least one second user node is an unrevoked user node among a plurality of user nodes managed by the issuing node, and the at least one second user node comprises the first user node.

29. The method according to any one of claims 19 to 28, further comprising:
sending, by the first user node, auxiliary information to the third user node, wherein the auxiliary information is used to prove that the first credential corresponding to the first user node is not revoked.

30. A security implementation method, comprising:
receiving, by a third user node, fourth digital signature sent by a first user node;
acquiring, by the third user node, a first credential of the first user node, wherein the first credential is generated by an issuing node with a first authority, the first authority refers to an authority capable of generating a credential, the first authority is jointly granted to the issuing node by a plurality of committee nodes; and
verifying, by the third user node, an identity of the first user node based on the first credential and the fourth digital signature.

31. The method according to claim 30, wherein the acquiring, by the third user node, the first credential of the first user node comprises:
receiving, by the third user node, storage location information sent by the first user node, wherein the storage location information is used to indicate a storage location of the first credential of the first user node in a block of the blockchain system; and
acquiring, by the third user node, the first credential from the block based on the storage location information.

32. The method according to claim 30 or 31, wherein the fourth digital signature is obtained by performing, based on a private key of the first user node, a signature operation on at least one of:
identification information of the first user node;
a public key of the first user node;
first service identification information, wherein the first service identification information is used to indicate a service type supported by the first user node;
first data identification information, wherein the first data identification information is used to indicate a data type supported by the first user node; or
the first credential.

33. The method according to any one of claims 30 to 32, wherein the first credential comprises at least one of:
identification information of the first user node;
a public key of the first user node;
first service identification information, wherein the first service identification information is used to indicate a service type supported by the first user node;
first data identification information, wherein the first data identification information is used to indicate a data type supported by the first user node;
a revocation factor, wherein the revocation factor is used to prove whether the first credential is revoked;
identification information of the issuing node;
a public key of the issuing node; or
a second digital signature, wherein the second digital signature is obtained by signing other information in the first credential based on a private key of the issuing node.

34. The method according to any one of claims 30 to 33, wherein the verifying, by the third user node, the identity of the first user node based on the first credential and the fourth digital signature comprises:
acquiring, by the third user node, a public key of the first user node in the first credential;
verifying, by the third user node, the fourth digital signature based on the public key of the first user node to obtain a fourth verification information; and
verifying, by the third user node, the identity of the first user node based on the fourth verification information.

35. The method according to claim 34, wherein the verifying, by the third user node, the identity of the first user node based on the fourth verification information comprises:
determining, by the third user node, that identity verification of the first user node is passed in a case where the fourth verification information is consistent with information in the first credential.

36. The method according to claim 34, wherein before the verifying, by the third user node, the identity of the first user node based on the first credential and the fourth digital signature comprises:
receiving, by the third user node, the reference information sent by the first user node, wherein the reference information comprises a first value and a second value, the first value is the value of a leaf node adjacent to the leaf node corresponding to the first user node in a Merkle tree, and the second value is a value of a remaining non-leaf node in the Merkle tree except non-leaf nodes to which the leaf node corresponding to the first user node belongs;
wherein the Merkle tree is constructed by the issuing node based on a credential of at least one second user node, the at least one second user node is an unrevoked user node among a plurality of user nodes managed by the issuing node, and the at least one second user node comprises the first user node.

37. The method according to claim 36, wherein the verifying, by the third user node, the identity of the first user node based on the fourth verification information comprises:
acquiring, by the third user node, a value of a root node in the Merkle tree;
generating, by the third user node, a verification value based on the first value, the second value and the fourth verification information; and
determining, by the third user node, that identity verification of the first user node is passed in response that the verification value is consistent with the value of the root node.

38. The method according to any one of claims 30 to 37, wherein after determining, by the third user node, that identity verification of the first user node is passed, the method further comprises:
receiving, by the third user node, auxiliary information sent by the first user node; and
verifying, by the third user node, whether the first credential is revoked based on the auxiliary information.

39. A security implementation system, comprising: a committee node, an issuing node and a user node; wherein
the committee node is configured to jointly authorize the issuing node, so that the issuing node has a first authority, wherein the first authority refers to an authority capable of generating a credential for a user node; and
the issuing node is configured to manage the user node, and in a case where the issuing node has the first authority, generate a credential of the user node in response to first request information sent by the user node.

40. A security implementation apparatus, applied to an issuing node,comprsising:
a first receiving unit, configured to receive first request information sent by a first user node, the first request information being used to request a first credential, wherein the first credential is used to verify an identity of the first user node; and
a credential generation unit, configured to generate the first credential in response to the first request information in a case where the issuing node has a first authority, wherein the first authority refers to an authority capable of generating a credential, and the first authority is jointly granted to the issuing node by a plurality of committee nodes.

41. A security implementation apparatus, applied to a blockchain node,comprising:
a second receiving unit, configured to receive second request information sent by an issuing node, the second request information being used for requesting to store a first credential, and the first credential being used to verify an identity of a first user node, wherein the first credential is generated by an issuing node in a case where the issuing node has a first authority, the first authority refers to an authority capable of generating a credential, and the first authority is granted by a committee node to the issuing node; and
a storage control unit, configured to store the first credential in a block, in a case where the identity verification of the first user node based on the first credential is passed.

42. A security implementation apparatus, applied to a first user node, comprising:
a third sending unit, configured to send first request information to an issuing node, the first request information being used to request a first credential, wherein the first credential is used to verify an identity of the first user node.

43. A security implementation apparatus, applied to a third user node, comprising:
a third receiving unit, configured to receive a fourth digital signature sent by a first user node;
an acquiring unit, configured to acquire a first credential of the first user node, wherein the first credential is generated by an issuing node with a first authority, the first authority refers to an authority capable of generating a credential, and the first authority is jointly granted to the issuing node by a plurality of committee nodes; and
a first verification unit, configured to verify an identity of the first user node based on the first credential and the fourth digital signature.

44. A communication device, comprising a processor and a memory, wherein the memory is configured to store a computer program, and the processor is configured to call and run the computer program stored in the memory, so as to perform the method according to any one of claims 1 to 10.

45. A communication device, comprising a processor and a memory, wherein the memory is configured to store a computer program, and the processor is configured to call and run the computer program stored in the memory, so as to perform the method according to any one of claims 11 to 18.

46. A communication device, comprising a processor and a memory, wherein the memory is configured to store a computer program, and the processor is configured to call and run the computer program stored in the memory, so as to perform the method according to any one of claims 19 to 29.

47. A communication device, comprising a processor and a memory, wherein the memory is configured to store a computer program, and the processor is configured to call and run the computer program stored in the memory, so as to perform the method according to any one of claims 30 to 38.

48. A chip, comprising a processor, configured to call a computer program from a memory and run the computer program, so as to enable a device equipped with the chip to perform the method according to any one of claims 1 to 10.

49. A chip, comprising a processor, configured to call a computer program from a memory and run the computer program, so as to enable a device equipped with the chip to perform the method according to any one of claims 11 to 18.

50. A chip, comprising a processor, configured to call a computer program from a memory and run the computer program, so as to enable a device equipped with the chip to perform the method according to any one of claims 19 to 29.

51. A chip, comprising a processor, configured to call a computer program from a memory and run the computer program, so as to enable a device equipped with the chip to perform the method according to any one of claims 30 to 38.

52. A computer-readable storage medium, configured to store a computer program, wherein the computer program enables a computer to perform the method according to any one of claims 1 to 10.

53. A computer-readable storage medium, configured to store a computer program, wherein the computer program enables a computer to perform the method according to any one of claims 11 to 18.

54. A computer-readable storage medium, configured to store a computer program, wherein the computer program enables a computer to perform the method according to any one of claims 19 to 29.

55. A computer-readable storage medium, configured to store a computer program, wherein the computer program enables a computer to perform the method according to any one of claims 30 to 38.

56. A computer program product, comprising computer program instructions, wherein the computer program instructions enable a computer to perform the method according to any one of claims 1 to 10.

57. A computer program product, comprising computer program instructions, wherein the computer program instructions enable a computer to perform the method according to any one of claims **11** to 18.

58. A computer program product, comprising computer program instructions, wherein the computer program instructions enable a computer to perform the method according to any one of claims 19 to 29.

59. A computer program product, comprising computer program instructions, wherein the computer program instructions enable a computer to perform the method according to any one of claims 30 to 38.

60. A computer program, wherein the computer program enables a computer to perform the method according to any one of claims 1 to 10.

61. A computer program, wherein the computer program enables a computer to perform the method according to any one of claims 11 to 18.

62. A computer program, wherein the computer program enables a computer to perform the method according to any one of claims 19 to 29.

63. A computer program, wherein the computer program enables a computer to perform the method according to any one of claims 30 to 38.
